# EUROPEAN PATENT SPECIFICATION

(11) **EP 2 680 342 B1**
(45) Date of publication and mention of the grant of the patent: **27.03.2019**
(21) Application number: 12749501.8
(22) Date of filing: 21.02.2012
(51) Int. Cl.: H01M 2/14, H01M 2/16, H01G 11/52, H01M 10/052

(54) **SEPARATOR FOR ACCUMULATORS, AND ACCUMULATOR**
SEPARATOR FÜR AKKUMULATOREN UND AKKUMULATOR
SÉPARATEUR POUR ACCUMULATEURS, ET ACCUMULATEURS

(30) Priority: 24.02.2011 JP 2011038317; 20.07.2011 JP 2011159106
(43) Date of publication of application: 01.01.2014
(73) Proprietor: NEC Corporation, Tokyo 108-8001 (JP)
(72) Inventor: MATSUMOTO, Kazuaki, Tokyo 108-8001 (JP); INOUE, Kazuhiko, Tokyo 108-8001 (JP)
(74) Representative: Glawe, Delfs, Moll
(86) International application number: PCT/JP2012/054102
(87) International publication number: WO 2012/115092

(56) References cited:
- WO-A1-98/32184
- CN-A- 101 320 818
- CN-A- 101 745 323
- JP-A- 7 161 342
- JP-A- H07 161 342
- JP-A- 2000 048 792
- JP-A- 2000 173 574
- JP-A- 2003 123 724
- JP-A- 2004 342 318
- JP-A- 2010 202 987
- US-A- 3 340 444

## Description

### TECHNICAL FIELD

The present invention relates to a lithium secondary battery and a method for producing it.

### BACKGROUND ART

With rapidly expanding the market of laptop computers, mobile phones, electric vehicles, and the like, electric storage devices such as capacitors and secondary batteries are actively studied. Among these, secondary batteries are attractive at the point that they can store more energy. Currently, secondary batteries having greater high energy density are required, and it is proposed, as a candidate, to use a metal such as tin or silicone, an alloy or oxide thereof for the negative electrode active substance. Also, it is also proposed to use a battery having a large theoretical capacity such as a lithium air battery. However, in the battery having high energy density, abnormal heat generation may occur due to overcharge. Therefore, it is desired to develop a battery having not only high energy density but also excellent safety.

As a method for improving safety, a method which makes the electrolyte liquid flame retardant is proposed (Non-Patent Document 1). There is also a proposed function to stop the movement of ions by dissolving the separator at higher temperature to result in clogging (so-called shut down function). These methods have a certain effect, but a safer technology is required in order to ensure the safety of the battery which is large and has high capacity.

Here, Patent Document 1 discloses a technology to use a paper produced by using cellulose fiber having high heat resistance as the separator. Also, in order to suppress oxidation / reduction reaction of a hydroxyl group (-OH) of cellulose, a method in which the hydroxyl group of cellulose is esterified is proposed in Patent Document 2.

### CITATION LIST

### PATENT DOCUMENT

Patent Document 1: JP 8-306352 A
Patent Document 2: JP 2003-123724 A
   Further prior art is disclosed in US 3 340 444 A, CN 101 320 818 A, JP H07 161342 A, CN 101 745 323 A.

### NON-PATENT DOCUMENT

Non-Patent Document 1: Journal of the Electrochemical Society, 148 (10) A1058-A1065 (2001)

### SUMMARY OF THE INVENTION

### PROBLEM TO BE SOLVED BY THE INVENTION

The separator mainly used until now is a polyolefin-based fine-porous separator composed of a polypropylene or polyethylene material. However, the polyolefin-based fine-porous separator may shrink at high temperatures. Therefore, in the polyolefin-based fine-porous separator, thermal shrinkage at the time of abnormal heat generation may occur to result in short-circuit of the positive electrode and the negative electrode.

In order to solve this problem, as mentioned above, the use of a separator which contains cellulose having high heat resistance as a main component is proposed in Patent Document 1. Cellulose has an excellent property that prevents the occurrence of thermal shrinkage even if the temperature is set to be high such as near 180°C.

Also, in secondary batteries having high energy density, the temperature of the battery tends to increase in the case where it is overcharged or in the case where strong impact is made from outside. Therefore, a battery having small temperature increases due to overcharge or due to impact from the outside is desired.

Thus, the object of an exemplary embodiment of the invention is to provide a separator for an electric storage device which has small thermal shrinkage in a high-temperature environment, and in which an increase of the battery temperature can be suppressed.

### MEANS OF SOLVING THE PROBLEM

One of the exemplary embodiments of the inventions is a lithium ion secondary battery according to claim 1.

One of the exemplary embodiments of the inventions is a lithium secondary battery according to claim 5.

One of the exemplary embodiments of the inventions is a method for producing a lithium ion secondary battery according to claim 12.

One of the exemplary embodiments of the inventions is a method for producing a lithium ion secondary battery according to claim 18.

### EFFECT OF THE INVENTION

An exemplary embodiment can provide a separator for an electric storage device which has small thermal shrinkage in a high-temperature environment, in which the increase of the battery temperature can be suppressed, and which has a high discharge capacity. Thus, an electric storage device, which has a separator for an electric storage device of an exemplary embodiment according to the invention, has a high discharge capacity, and also has high safety.

### BRIEF DESCRIPTION OF DRAWINGS

FIG. 1 shows a schematic sectional view of a structure in a stacked laminate type secondary battery.
FIG. 2 shows the IR spectrum of the phosphate cellulose separator in Production Example 1.
FIG. 3 shows the IR spectrum of the cellulose separator before the phosphate treatment.

### MODE FOR CARRYING OUT THE INVENTION

### (Embodiment 1)

As mentioned above, one of the exemplary embodiments is a separator for an electric storage device containing a cellulose derivative represented by formula (1).

In formula (1), the phosphoric acid residue is represented by following formula (2): 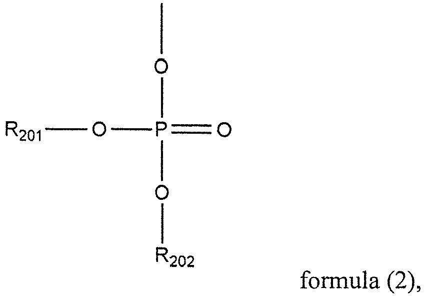 wherein, in formula (2), R₂₀₁ and R₂₀₂ each independently represent hydrogen atom, a substituted or non-substituted alkyl group or a substituted or non-substituted aryl group.

Also, in formula (1), the phosphorous acid residue is represented by following formula (3): 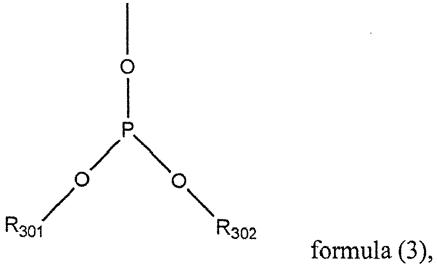 wherein, in formula (3), R₃₀₁ and R₃₀₂ each independently represent hydrogen atom, a substituted or non-substituted alkyl group or a substituted or non-substituted aryl group.

In formulae (2) and (3), the alkyl group is preferably an alkyl group with a total carbon number of 1 to 8, is more preferably an alkyl group with a total carbon number of 1 to 6, and is further preferably an alkyl group with a total carbon number of 1 to 4. Also, the alkyl group includes straight-chain type alkyl groups, branched-chain type alkyl groups or cyclic-chain type alkyl groups.

In formulae (2) and (3), the aryl group is preferably an aryl group with a total carbon number of 6 to 18, is more preferably an aryl group with a total carbon number of 6 to 12, and is further preferably an aryl group with a total carbon number of 6 to 10.

In formulae (2) and (3), examples of the substituent of alkyl group or aryl group include, for example, halogen atoms, and include preferably fluorine atom.

Also, in formula (2), a cyclic structure may be formed by a carbon-carbon bond between R₂₀₁ and R₂₀₂. It is the same in formula (3), and a cyclic structure may be formed by a carbon-carbon bond between R₃₀₁ and R₃₀₂.

In formula (2), R₂₀₁ and R₂₀₂ as well as R₃₀₁ and R₃₀₂ are preferably an alkyl group from the standpoint of suppressing an increase of irreversible capacity.

A separator for an electric storage device of an exemplary embodiment may be formed, for example, by making a paper with a fiber of the phosphate-esterified cellulose by paper-making method. Also, it may be formed by making a weave with a fiber of the phosphate-esterified cellulose. Also, it can be obtained by phosphate-esterification or phosphite-esterification treatment of a cellulose separator which is conventionally used as the separator. In this case, it is desirable to remove binders such as polyethyleneimines, sodium alginate and polyacrylamides which may be used when the cellulose is produced, before or during phosphate-esterification treatment.

The thickness of a separator for an electric storage device of an exemplary embodiment is preferably, but should not particularly be limited to, 10 µm or more and 200 µm or less, is more preferably 20 µm or more and 100 µm or less, and further desirably 50 µm or less, in the case when it is used alone. This is because the strength in the film thickness direction is improved and the generation of an internal short-circuit is suppressed when it is 10 µm or more. Also, when it is 50 µm or less, the increase of internal resistance and the decrease of the discharge capacity can be suppressed. Note that, in the case where one film is laminated with another film to form a separator, the thickness of each film may be appropriately determined based on the total thickness of the films which are formed by lamination.

Also, the porosity is desirably 30 % or more and 99 % or less. This is because the film resistance is deceased and the battery performance is improved when it is 30 % or more, like the case of the average pore size. In order to further decrease the liquid resistance, it is more desirably 55 % or more. More preferably, it is 60 % or more. Also, this is because the generation of an internal short-circuit is suppressed when it is 99 % or less. The porosity can be calculated, for example, from the true density and the total volume of the material that is a raw material of the fine-porous film and from the weight and the volume of the fine-porous film. Further, from the stand point of suppressing the generation of the internal short-circuit, the anti-pinhole strength in the film thickness direction is desirably a certain level value or more. The anti-pinhole strength can be evaluated, for example, from the load when a metal needle (diameter 1 to 2 mm, tip r = 0.5 mm) is stuck into the fine-porous film as a measuring object with a constant speed by using a strength testing machines such as a texture analyzer.

Also, a separator for an electric storage device of an exemplary embodiment is a separator whose main component is a cellulose fiber and in which at least a part of hydroxy group on a surface of the cellulose fiber is replaced by a phosphoric acid residue or a phosphorous acid residue.

The separator preferably contains 30 mass% or more of the cellulose fiber in the constitutional materials, more preferably contains 50 % or more of it, further preferably contains 70 % or more of it, and particularly preferably contains 90 % or more of it.

### (Embodiment 2)

A separator for an electric storage device according to an exemplary embodiment can be obtained by making a cellulose separator, whose main component is cellulose, come into contact with a solution containing a phosphate or a phosphite, and water and preferably by carrying out heat treatment in a state of contacting. In other words, a production method according to an exemplary embodiment is also understood to be a method for producing a separator for an electric storage device, in which a cellulose separator whose main component is cellulose is made to contact with a solution containing a phosphate or a phosphite, and water.

In an exemplary embodiment of the invention, the phosphate is represented by formula (4): 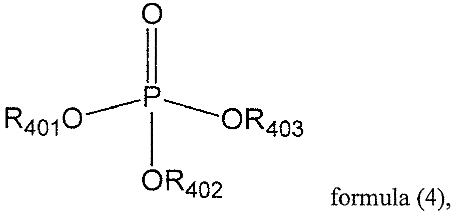 wherein, in formula (4), R₄₀₁ to R₄₀₃ each independently represent hydrogen atom, a substituted or non-substituted alkyl group or a substituted or non-substituted aryl group, and any of R₄₀₁ to R₄₀₃ is a substituted or non-substituted alkyl group or a substituted or non-substituted aryl group.

In an exemplary embodiment of the invention, the phosphite is represented by formula (5): 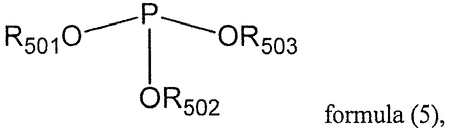 wherein, in formula (5), R₅₀₁ to R₅₀₃ each independently represent hydrogen atom, a substituted or non-substituted alkyl group or a substituted or non-substituted aryl group, and any of R₅₀₁ to R₅₀₃ is a substituted or non-substituted alkyl group or a substituted or non-substituted aryl group.

In formulae (4) and (5), the alkyl group is preferably an alkyl group with a carbon number of 1 to 8, is more preferably an alkyl group with a carbon number of 1 to 6, and is further preferably an alkyl group with a carbon number of 1 to 4. Also, the alkyl group includes straight-chain type alkyl groups, branched-chain type alkyl groups or cyclic-chain type alkyl groups.

In formulae (4) and (5), the aryl group is preferably an aryl group with a carbon number of 6 to 18, is more preferably an aryl group with a carbon number of 6 to 12, and is further preferably an aryl group with a carbon number of 6 to 10.

In formulae (4) and (5), examples of the substituent of alkyl group or aryl group include, for example, halogen atoms, and include preferably fluorine atom.

Also, in formula (4), R₄₀₁ to R₄₀₃ are all an alkyl group. Also, in formula (5), R₅₀₁ to R₅₀₃ are all an alkyl group.

In an exemplary embodiment of the invention, it is preferable to treat the cellulose separator with a phosphate.

Specific examples of the phosphate include, for example, trimethyl phosphate, triethyl phosphate, tripropyl phosphate, trioctyl phosphate and triphenyl phosphate. Also, compounds having a structure obtained by substituting a part or all of hydrogen atom of a non-substituted phosphate by a halogen atom such as fluorine atom or chlorine atom may be used, and examples thereof include, for example, tristrifluoroethyl phosphate and tristrichloroethyl phosphate. Among these, triethyl phosphate, trioctyl phosphate or the like, which is a liquid at room temperature and which has relatively electrochemically stable, is particularly preferable.

Also, in an exemplary embodiment of the invention, the cellulose separator may be treated with a phosphite. Specific examples of the phosphite include, for example, trimethyl phosphite, triethyl phosphite, tripropyl phosphite, trioctyl phosphite or triphenyl phosphite. Also, compounds having a structure obtained by substituting a part or all of hydrogen atom of a non-substituted phosphite by a halogen atom such as fluorine atom or chlorine atom may be used, and examples thereof include, for example, tristrifluoroethyl phosphite and tristrichloroethyl phosphite.

Here, the treatment of the cellulose separator with a phosphate is described. In an exemplary embodiment of the invention, the cellulose separator whose main component is cellulose is made to contact with a solution containing a phosphate or a phosphite, and water. Also, it is preferable to carry out heat treatment in a state where the cellulose separator is made to contact with the solution. Here, after the cellulose separator is immersed in a phosphate, it is preferable to add water. By adding water in a state where the cellulose separator is previously immersed in the phosphate, dissolution of the cellulose separator by phosphoric acid generated by hydrolysis can be further suppressed. In this case, after the cellulose separator is immersed in a phosphate or a phosphite, it is preferable to add water in a state where it is controlled to a predetermined temperature by heat treatment. Note that, after the cellulose separator is immersed in a phosphate or a phosphite, and water is then added, the solution may reach a predetermined temperature by heat treatment.

From the stand point that a hydroxy group of the cellulose is easily reacted with a hydrolyzed phosphate to generate a phosphoric acid residue, the temperature of the solution in the heat treatment is preferably 70°C or higher and 150°C or lower and is more preferably 100°C or higher and 140°C or lower.

The time of the heat treatment should not particularly be limited, but is 30 minutes or more, for example.

Also, water is preferably added slowly in a predetermined amount to a phosphate or a phosphite into which the cellulose separator was immersed.

The amount of water should not particularly be limited, but is, for example, 1 part by mass or more and 50 parts by mass or less with respect to 100 parts by mass of a phosphate or a phosphite, is more preferably 40 parts by mass or less, and is further preferably 30 parts by mass or less. When the amount of water is 1 part by mass or more with respect to a phosphate or a phosphite, the phosphate or the phosphite is easily hydrolyzed. Also, when the amount of water is 40 parts by mass or less, the ratio of hydrolyzing the phosphate or the phosphite is easily controlled.

By making a cellulose separator come into contact with a solution containing a phosphate and water, and preferably by heating it in the solution, the hydroxy group of the cellulose is thought to be phosphate-esterified. In other words, when water is added to a phosphate such as the triethyl phosphate, the phosphate is hydrolyzed. As well, by carrying out heat treatment, the hydrolyzed phosphate is thought to be reacted with a hydroxy group of the cellulose to add a phosphoric acid residue to the cellulose separator. In this case, by carrying out heat treatment, the reaction of hydrolyzed phosphate with a hydroxy group of the cellulose can is thought to be promoted. Also, water is evaporated by heat treatment and the dehydration reaction can easily occur.

In this case, in order to promote the reaction of the hydrolyzed phosphate with the hydroxyl group of cellulose, an acid in an appropriate amount may be added to the solution. Examples of the acids include, for example, hydrochloric acid, sulfuric acid, concentrated sulfuric acid and phosphoric acid. The pH of the solution is preferably 1 to 8 and is more preferably 3 to 7.

Also, by the treatment using a phosphate as mentioned above, a phosphoric acid residue is introduced into the surface of the cellulose fiber of the cellulose separator.

The cellulose separator in which the phosphate treatment is carried out should not particularly be limited, and can be used without any particular problem as long as it is a separator containing cellulose. For example, well-known separators containing cellulose can be used.

Also, the cellulose separator whose main component is cellulose fiber preferably contains 30 mass% or more of cellulose fiber in the constitutional materials that make up the separator, more preferably contains 50 mass% or more, further preferably contains 70 % or more, and particularly preferably contains 90 % or more. Also, the cellulose separator whose main component is cellulose fiber preferably contains cellulose fiber as a main component.

Also, the cellulose separator may be a nonwoven cloth produced containing a material other than cellulose to improve the strength as long as it contains cellulose fiber. Examples of the material other than cellulose include, for example, resin materials such as polypropylenes, polyethylenes, polyethylene terephthalates (PET), polytetrafluoroethylenes, polyvinylidene fluorides, polyimides and polyamide-imides. Also, materials, in which one side or both sides of the cellulose is chemically modified with this material or is physically modified by spin coat or the like, may be used. Also, cellulose papers, which are physically coated with aluminum oxide on the surface by application or spin coat, may be used.

Also, as the cellulose separator, materials, in which a film or a paper comprising a resin material such as a polyethylene, a polypropylene, a polyethylene terephthalate, a polytetrafluoroethylene, a polyvinylidene fluoride, a polyimide, or a polyamide-imide is laminated on a cellulose paper, can be used.

Also, the cellulose separator preferably contains 30 mass% or more of a cellulose component in the constitutional materials in order to keep the strength when it was immersed in the electrolyte liquid. Also, when it contains 50 mass% or more of a cellulose component, occurrence of an internal short-circuit of the battery can be further suppressed. A nonwoven cloth which contains 70 mass% or more of a cellulose component in the constitutional materials is further preferable.

After heat treatment in the solution, drying treatment can be appropriately carried out.

After a hydroxy group is replaced by a phosphoric acid residue or a phosphorous acid residue, the solution can be removed by washing. Examples of the solvent used for washing include, for example, nonaqueous solvents such as chloroform, acetonitrile or hexane.

Also, the thickness of the cellulose separator used for the production is preferably, but should not particularly be limited to, 10 µm or more and 200 µm or less, is more preferably 20 µm or more and 100 µm or less, and further desirably 50 µm or less, in the case where it is used alone. This is because the strength in the film thickness direction is improved and the generation of an internal short-circuit is suppressed when the thickness is 10 µm or more. Also, when the thickness is 50 µm or less, the increase of internal resistance and the decrease of discharge capacity can be suppressed. Note that, in the case where one film is laminated with another film to form a separator, the thickness of each film may be appropriately determined based on the total thickness of the films which are formed by lamination.

Also, the porosity of the cellulose separator used for the production is desirably 30 % or more and 99 % or less. This is because film resistance is deceased and battery performance is improved when it is 30 % or more, as in the case of the average pore size. In order to further decrease the liquid resistance, the porosity is more desirably 55 % or more. More preferably, the porosity is 60 % or more. Also, this is because the generation of the internal short-circuit is suppressed when the porosity is 99 % or less. The porosity can be calculated, for example, from the true density and the total volume of the material that is a raw material of the fine-porous film and from the weight and the volume of the fine-porous film. Further, from the stand point that the generation of the internal short-circuit is suppressed, the anti-pinhole strength in the film thickness direction is desirably a certain level value or more. The anti-pinhole strength can be evaluated, for example, from the load when a metal needle (diameter 1 to 2 mm, tip r = 0.5 mm) is stuck into the fine-porous film as measuring object with a constant speed by using a strength testing machines such as a texture analyzer.

### (Embodiment 3)

As another embodiment, a method for producing a separator for an electric storage device, in which an inorganic material-containing separator which contains an inorganic fiber having a hydroxy group on a surface thereof is made to contact with a solution containing a phosphate or a phosphite, and water, is explained.

As a phosphate or a phosphite in an exemplary embodiment of the invention, the above-mentioned compounds can be used.

The inorganic material-containing separator contains, as a main component, an inorganic fiber having a hydroxy group on the face. Examples of the inorganic fiber include, for example, alumina fiber, carbon fiber or glass fiber, titanium oxide fiber and boron oxide fiber. Also, the inorganic fiber may be a fiber composed of ceramic or a fiber composed of an inorganic electrolyte material such as a lithium ion conductor. Also, among these, as the inorganic fiber, alumina fiber or glass fiber is preferably used. Examples of the glass fiber include, for example, microfiber wool, long fiber, and glass wool glass fiber.

Also, the inorganic material-containing separator may contain a particle composed of an inorganic material (hereinafter, also referred to as inorganic particle). Examples of the inorganic particle include, for example, alumina particle, silica particle or carbon material particle, titanium oxide particle, boron oxide particle, quartz glass particle, silicon oxide particle, calcium oxide particle, magnesium oxide particle, potassium oxide particle, sodium oxide particle, aluminum nitride particle, and silicon nitride particle. Among these, as an inorganic particle, alumina particle or silica particle is preferably used. For example, the inorganic particle can be fixed in an inorganic fiber using a binder. Also, the inorganic particle may be contained in an inorganic fiber.

Also, the inorganic material-containing separator may be used after surface treatment with a solution containing, for example, calcium fluoride, barium sulfate, barium fluoride, a calcium salt, a sodium salt, a magnesium salt, a potassium salt, or an amide sulfate. Note that, the inorganic material-containing separator used in this Example is a separator obtained by spraying an aqueous solution containing an amide sulfate (Sawada Chemical; Not Burn) on a glass cross obtained by weaving a glass fiber (Sawada Chemical; flame-retardant mesh) by a spray for surface treatment.

The shrinkage ratio of the inorganic material-containing separator in the case of keeping it at 200°C for 10 seconds is preferably 30 % or less, and the shrinkage ratio in the case of keeping it at 300°C for 10 seconds is more preferably 10 % or less.

Also, a material obtained by mixing an alkali resistance glass fiber with mortar or concrete for reinforcement may be used as the inorganic material-containing separator.

The inorganic material-containing separator can be obtained, for example, by forming the above-mentioned inorganic fiber in the shape of sheet, film, mesh or cross. For example, an inorganic material-containing separator can be obtained by tangling the above-mentioned inorganic fiber to form a sheet or cloth by using mechanical or chemical operation. At this time, a binder may be added in order to make the inorganic fiber adhere. Also, the inorganic material-containing separator can also be obtained by weaving a twisted inorganic fiber in a shape of yarn to form a cloth, film, sheet, mesh or cross. Examples of the inorganic material-containing separator include, for example, nonwoven cloth made from glass fiber and thin film glass cross. As the inorganic material-containing separator, woven fabric is desirable because the amount of the binder is small and a thin film with 50 µm or less is also easy to produce. Also, the inorganic material-containing separator may be a separator which is obtained by applying an organic or inorganic binder on the knit of an inorganic fiber knitted in the shape of a sheet or mesh, and then by heating it for heat treatment using a gas burner for several seconds or by drying it under vacuum at 100°C or higher. The thermal shrinkage ratio of the knit by this heat treatment or heat drying treatment is desirably 20 % or less with respect to the original size and is more desirably 5 % or less.

The inorganic fiber may be used alone or in combination with two or more kinds of materials.

The inorganic material-containing separator preferably contains, as a main component, an inorganic fiber which has a hydroxy group on the surface.

Also, examples of the inorganic material-containing separator preferably include, for example, a constitution in which a glass fiber is a main component and in which a silica particle or an alumina particle are contained.

The inorganic material-containing separator preferably contains 30 mass% or more of inorganic fiber in the constitutional components that make up the separator, more preferably contains 50 mass% or more, further preferably contains 70 % or more, and particularly preferably contains 90 % or more.

Also, the inorganic material-containing separator may be a separator in which the inorganic fiber is used as a main component and in which the strength of the inorganic fiber is increased by an organic or inorganic binder. The amount of the organic binder is preferably 20 mass% or less in the constitutional components that make up the inorganic material-containing separator from the standpoint of improving heat resistance, and is more preferably 10 mass% or less.

Also, the shape of the inorganic material-containing separator should not particularly be limited, but is, for example, paper, mesh or plate. Among these, in order to decrease the amount of the binder, a mesh shape obtained by weaving the inorganic fiber like a knit is preferable. Examples of the weaving method include, for example, plain weave, twill weave, sateen weave, tangle weave, mock leno weave, broken twill figured weave and double weave.

The thickness of the inorganic material-containing separator used for the production is preferably, but should not particularly be limited to, 10 µm or more and 200 µm or less, is more preferably 20 µm or more and 100 µm or less, and further desirably 50 µm or less, in the case when it is used alone. This is because the strength in the film thickness direction is improved and the generation of an internal short-circuit is suppressed when the thickness is 10 µm or more. Also, when the thickness is 50 µm or less, the increase of internal resistance and the decrease of the discharge capacity can be suppressed. Note that, in the case where one film is laminated with another film to form a separator, the thickness of each film may be appropriately determined based on the total thickness of the films which are formed by lamination.

Also, the porosity of the inorganic material-containing separator used for the production is desirably 30 % or more and 99 % or less. This is because the film resistance is deceased and the battery performance is improved when the porosity is 30 % or more, as in the case of the average pore size. In order to decrease the liquid resistance more, the porosity is more desirably 55 % or more. More preferably, the porosity is 60 % or more. Also, this is because the generation of the internal short-circuit is suppressed when it is 99 % or less. The porosity can be calculated, for example, from the true density and the total volume of the material that is a raw material of the fine-porous film and from the weight and the volume of the fine-porous film. Further, from the stand point of suppressing the generation of the internal short-circuit, the anti-pinhole strength in the film thickness direction is desirably a certain level value or more. The anti-pinhole strength can be evaluated, for example, from the load when a metal needle (diameter 1 to 2 mm, tip r = 0.5 mm) is stuck into the fine-porous film as measuring object with a constant speed by using a strength testing machines such as a texture analyzer.

One of the exemplary embodiments is a method for producing a separator for an electric storage device, in which an inorganic material-containing separator which contains an inorganic fiber having a hydroxy group on a surface thereof is made to contact with a solution containing a phosphate or a phosphite, and water.

The method of the treatment of the inorganic material-containing separator using a phosphate or a phosphite can be the same method as that for the above-mentioned cellulose separator. In other words, a production method according to an exemplary embodiment is also understood to be a method for producing a separator for an electric storage device, in which an inorganic material-containing separator is made to contact with a solution containing a phosphate or a phosphite, and water. Also, it is preferable to carry out heat treatment in a state where the inorganic material-containing separator is made to contact with the solution.

Also, the solution contains at least a phosphate or a phosphite, and water, but may additionally contain an acid in order to promote the reaction. Examples of the acids include, but should not particularly be limited to, for example, concentrated sulfuric acid, sulfuric acid, hydrochloric acid and phosphoric acid. The pH of the solution is preferably 1 to 8 and is more preferably 3 to 7.

After a hydroxy group is replaced by a phosphoric acid residue or a phosphorous acid residue, the solution can be removed by washing. Examples of the solvent used for washing include, for example, nonaqueous solvents such as chloroform, acetonitrile or hexane.

Note that, the above-mentioned treatment using a phosphate or a phosphite is carried out against an inorganic fiber and an inorganic material-containing separator may be obtained by forming the treated inorganic fiber into a shape of cloth, sheet, mesh, film or cross.

Also, in the inorganic material-containing separator, a hydroxy group of the inorganic material-containing separator can be replaced by a phosphoric acid residue or a phosphorous acid residue using a phosphoric acid or a phosphorous acid and an acid such as concentrated sulfuric acid. By this method, a hydroxy group of the inorganic material-containing separator can effectively be replaced by a phosphate group or a phosphite group. Note that, since the inorganic material-containing separator has tolerability, these acids can preferably be used. The heat treatment as mentioned above is also preferable.

The content of phosphoric acid in the solution is, for example, 100 to 200 mass% and is preferably 150 to 190 mass%. The content of the acid in the solution is, for example, 1 to 50 mass% and is preferably 20 to 40 mass%. The pH of the solution is preferably 1 to 8 and is more preferably 3 to 7.

The separator for an electric storage device prepared by the above-mentioned method is a separator in which a hydroxy group on an inorganic fiber surface of an inorganic material-containing separator whose main component is an inorganic fiber is replaced by a phosphoric acid residue or a phosphorous acid residue. The phosphoric acid residue and the phosphorous acid residue is the same as mentioned above.

A separator for an electric storage device of the present reference embodiment can preferably be applied to the structure of a secondary battery explained in the above-mentioned embodiment. Note that, it can be applied to a capacitor, for example.

### (Embodiment 4)

As follows, a lithium secondary battery is explained in detail.

A secondary battery according to an exemplary embodiment of the invention is a secondary battery which has a separator for an electric storage device of an exemplary embodiment of the invention.

An electrode assembly in which a positive electrode and a negative electrode are oppositely disposed, a separator for an electric storage device of an exemplary embodiment of the invention and an electrolyte liquid are enclosed inside a package. As for the shape of the secondary battery, cylindrical type, flattened spiral square type, stacked square type, coin type, flattened spiral laminate type and stacked laminate type can be used. Among these, the shape of the secondary battery is preferably a stacked laminate type from the standpoint that it is difficult for a tear to occur in the separator. A stacked laminate type secondary battery is explained, as follows.

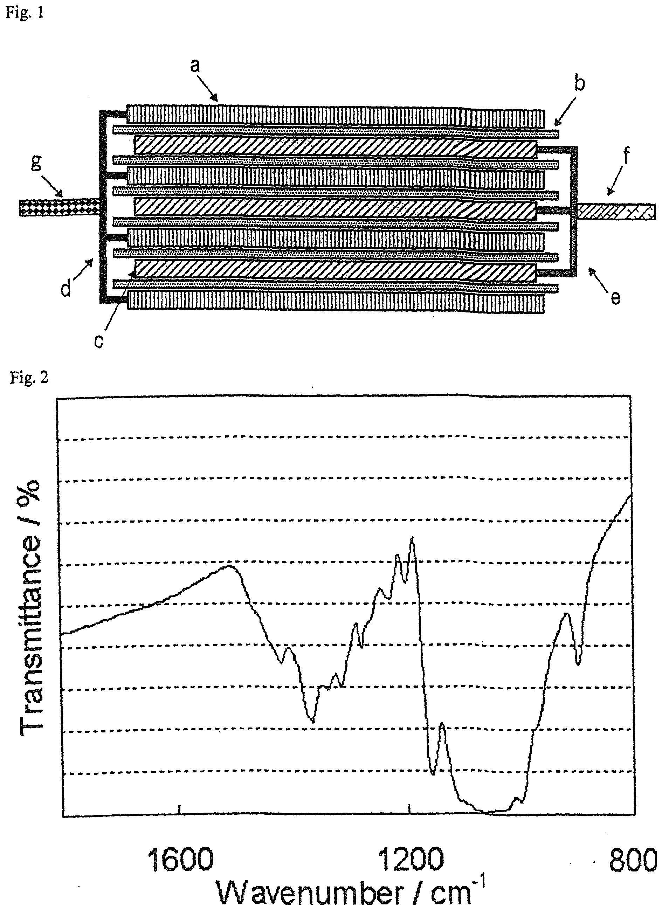

FIG. 1 is a schematic cross-sectional view showing the structure of an electrode assembly in a stacked laminate type secondary battery. This electrode assembly is formed by alternately stacking plural positive electrodes c and plural negative electrodes a with separator b placed therebetween. Positive electrode collector e in each positive electrode c is electrically connected by being welded to one another at the end part thereof which is not covered with a positive electrode active substance, and further positive electrode terminal f is welded to the welded part. A negative electrode collector d in each negative electrode a is electrically connected by being welded to one another at the end part thereof which is not covered with a negative electrode active substance, and further negative electrode terminal g is welded to the welded part.

The electrode assembly having such a planar stacking structure has an advantage that it is hardly affected by volume change of the electrode that is associated with charging and discharging, in comparison with an electrode assembly having a spiral structure because no part of the electrode assembly with a planar stacking structure has a small R (an area near the spiral center of the spiral structure). That is, it is useful as an electrode assembly in which an active substance which easily generates volume change is used.

### <Negative electrode>

A lithium secondary battery of an exemplary embodiment of the invention has a negative electrode containing a negative electrode active substance. The negative electrode active substance can be bound on a negative electrode collector with a negative electrode binder.

The negative electrode active substance should not particularly be limited, but, for example, can contain carbon material (a) that can absorb and desorb lithium ion, metal (b) that can be alloyed with lithium, and metal oxide (c) that can absorb and desorb lithium ion.

Examples of the negative electrode active substance in an exemplary embodiment of the invention include, for example, but should not particularly be limited to, carbon material (a) that can absorb and desorb lithium ion, metal (b) that can be alloyed with lithium, or metal oxide (c) that can absorb and desorb lithium ion.

As carbon material (a), graphite, amorphous carbon, diamond-like carbon, carbon nanotube or a complex thereof can be used. Here, graphite having high crystallinity has high electroconductivity and excellent adhesiveness with a positive electrode collector that is made of metal such as copper or the like as well as excellent voltage flatness. On the other hand, since amorphous carbon having low crystallinity has relatively low volume expansion, this has the significant effect of reducing the volume expansion of the entire negative electrode, and deterioration due to ununiformity such as a crystal grain boundary or a defect hardly occurs.

Examples of metal (b) include, for example, Al, Si, Pb, Sn, In, Bi, Ag, Ba, Ca, Hg, Pd, Pt, Te, Zn, La, or an alloy of two or more kinds of these metals. Also, this metal or alloy may be used in combination with two or more kinds. Also, this metal or alloy may contain one or more non-metal elements. In an exemplary embodiment of the invention, it is preferable to contain tin or silicone as a negative electrode active substance, and is more preferable to contain silicone. The reason for this is because it is difficult for a reaction to occur between the phosphoric acid residue that is contained in the cellulose for an electric storage device of the exemplary embodiment of the invention and tin and silicone, and thus an increase in irreversible capacity can be suppressed.

Examples of metal oxide (c) include, for example, silicon oxide, aluminum oxide, tin oxide, indium oxide, zinc oxide, lithium oxide or a complex thereof. In an exemplary embodiment of the invention, it is preferable to contain tin oxide or silicon oxide as a negative electrode active substance, and is more preferable to contain silicon oxide. The reason for this is because silicon oxide is relatively stable and this makes it difficult for a reaction to occur with another chemical compound. Also, one element or two or more elements selected from nitrogen, boron and sulfur can be added as metal oxide (c), for example, in the amount of 0.1 to 5 mass%. In this way, the electroconductivity of metal oxide (c) can be improved.

As for metal oxide (c), all or a part thereof preferably has an amorphous structure. Metal oxide (c) having an amorphous structure can suppress the volume expansion of carbon material (a) or metal (b) that is another negative electrode active substance. Although this mechanism is not clear, the amorphous structure of metal oxide (c) is assumed to have some influence on coating formation at the interface between carbon material (a) and the electrolyte liquid. Also, it is assumed that the amorphous structure has a relatively small constituent due to ununiformity such as a crystal grain boundary or a defect. Note that, X-ray diffraction measurement (general XRD measurement) can confirm that all or a part of metal oxide (c) has an amorphous structure. Specifically, in the case where metal oxide (c) does not have an amorphous structure, a peak peculiar to metal oxide (c) is observed, while in the case where all or a part of metal oxide (c) has an amorphous structure, the observed peak peculiar to metal oxide (c) becomes to be broad.

The negative electrode active substance in an exemplary embodiment of the invention preferably contains carbon material (a) that can absorb and desorb lithium ion, metal (b) that can be alloyed with lithium, and metal oxide (c) that can absorb and desorb lithium ion. Also, metal (b) is preferably silicone, and metal oxide (c) is preferably silicone oxide. In other words, the negative electrode active substance preferably comprises a complex of silicone, silicone oxide and carbon material (hereinafter, also referred to as Si/SiO/C complex).

Also, a negative electrode active substance which has been previously doped with lithium chemically or thermally, can be used. For example, regarding thermal doping method, the negative electrode active substance is brought into contact with lithium metal and the entire electrode is heated to enable doping lithium to the negative electrode active substance.

In the Si/SiO/C complex, all or a part of silicon is dispersed in silicon oxide. The dispersion of at least a part of silicon in silicon oxide can suppress the volume expansion of the negative electrode as a whole and can also suppress decomposition of an electrolyte liquid. Note that, it can be confirmed by transmission electron microscope observation (general TEM observation) together with energy dispersive X-ray spectroscopy measurement (general EDX measurement) that all or a part of silicon is dispersed in silicon oxide. Specifically, a section of a specimen containing silicon particle is observed and oxygen atom concentration of silicon particles which are dispersed in silicon oxide is measured, and thereby it can be confirmed that it does not become an oxide.

In the Si/SiO/C complex, for example, all or a part of silicon oxide has an amorphous structure and all or a part of silicon is dispersed in silicon oxide. This Si/SiO/C complex can be produced, for example, by the method disclosed in Patent Document 3 (JP 2004-47404 A). That is, CVD processing of silicon oxide is carried out in an atmosphere containing organic substance gas such as methane gas, to obtain the Si/SiO/C complex. In the Si/SiO/C complex obtained by this method, the surface of the particle which consists of silicon oxide containing silicon is covered with carbon. Also, silicon becomes a nanocluster in silicon oxide.

In the Si/SiO/C complex, the ratio of carbon material, silicone and silicone oxide should not particularly be limited. The content of carbon material is preferably 2 mass% or more and 50 mass% or less with respect to the Si/SiO/C complex, and is more preferably 2 mass% or more and 30 mass% or less. The content of silicon is preferably 5 mass% or more and 90 mass% or less with respect to the Si/SiO/C complex, and is more preferably 20 mass% or more and 50 mass% or less. The content of silicon oxide is preferably 5 mass% or more and 90 mass% or less with respect to the Si/SiO/C complex, and is more preferably 40 mass% or more and 70 mass% or less.

Also, the Si/SiO/C complex can consist of a mixture of carbon material, silicon and silicon oxide. For example, the Si/SiO/C complex can be obtained by mixing each particle of carbon material, silicon and silicon oxide. For example, the average particle diameter of silicon can be constituted in a range smaller than the average particle diameter of carbon material and the average particle diameter of silicon oxide. By this structure, since silicon, in which the volume change associated with charge and discharge is small, has a relatively small particle diameter, and since carbon material and silicon oxide, in which the volume change is large, has a relatively large particle diameter, dendrite generation and the pulverization of alloy are more effectively suppressed. Also, in the process of charge and discharge, lithium is absorbed and desorbed from the larger diameter particle, the smaller diameter particle and the larger diameter particle in this order. From this point, the residual stress and the residual strain are suppressed. The average particle diameter of silicon can be, for example, 20 µm or less, and is preferably 15 µm or less.

The negative electrode binder should not particularly be limited, but, for example, polyvinylidene fluorides, vinylidene fluoride-hexafluoropropylene copolymers, vinylidene fluoride-tetrafluoroethylene copolymers, styrene-butadiene rubbers, polytetrafluoroethylenes, polypropylenes, polyethylenes, polyimides, polyamide-imides and polyacrylic acids can be used. Among these, a polyimide or a polyamide-imide is preferable because it has a strong binding property. The amount of the negative electrode binder used is preferably 5 to 25 parts by mass with respect to 100 parts by mass of the negative electrode active substance from the standpoint of "sufficient binding force" and "high energy" which are trade-offs.

As the negative electrode collector, aluminum, nickel, stainless steel, chromium, copper, silver and alloys thereof are preferable from the standpoint of electrochemical stability. Examples of the shape thereof include foil, flat plate and mesh.

A negative electrode can be produced by forming a negative electrode active substance layer containing a negative electrode active substance and a negative electrode binder on a negative electrode collector. Examples of the method of forming the negative electrode active substance layer include doctor blade method, die coater method, CVD method, and sputtering method. A negative electrode active substance layer may first be formed, and a thin film of aluminum, nickel or an alloy thereof may thereafter be formed by vapor deposition, sputtering or the like to obtain the negative electrode.

### <Positive electrode>

For example, the positive electrode is formed by binding a positive electrode active substance on a positive electrode collector with a positive electrode binder so that the positive electrode active substance covers the positive electrode collector.

Examples of the positive electrode active substance include lithium manganates having a layered conformation or lithium manganates having a Spinel conformation such as LiMnO₂, LiₓMn₂O₄ (0 < x < 2), Li₂MnO₃ and LiₓMn_{1.5}Ni_{0.5}O₄ (0 < x < 2); LiCoO₂, LiNiO₂ and compounds in which a part of the transition metal thereof are substituted by another metal; lithium transition metal oxides such as LiNi_{1/3}Co_{1/3}Mn_{1/3}O₂ in which the molar ratio of a particular transition metal is not more than a half; compounds which have a larger amount of Li than the stoichiometric amount in these lithium transition metal oxides; and compounds which has an Olivine conformation such as LiFePO₄. Also, materials obtained by substituting a part of these metal oxides by Al, Fe, P, Ti, Si, Pb, Sn, In, Bi, Ag, Ba, Ca, Hg, Pd, Pt, Te, Zn, La or the like can be used. In particular, Li_{α}Ni_{β}Co_{γ}Al_{δ}O₂ (1 ≤ α ≤ 2, β + γ + δ = 1, β ≥ 0.7, and γ ≤ 0.2) or Li_{α}Ni_{β}Co_{γ}Mn_{δ}O₂ (1 ≤ α ≤ 1.2, β + γ + δ = 1, β ≥ 0.6, and γ ≤ 0.2) is preferable. The positive electrode active substance can be used alone, or in combination with two or more kinds of materials.

In addition, radical materials and the like can also be used as the positive electrode active substance.

As a positive electrode binder, the same materials for a negative electrode binder can be used. Among these, from the standpoint of versatility and low cost, polyvinylidene fluorides are preferable. The amount of the positive electrode binder used is preferably 2 to 15 parts by mass with respect to 100 parts by mass of the positive electrode active substance from the standpoint of "sufficient binding force" and "high energy" which are trade-offs.

As a positive electrode collector, the same materials for a positive electrode collector can be used.

For the purpose of decreasing impedance, an electroconductive auxiliary material may be added to a positive electrode active substance layer containing a positive electrode active substance. Examples of the electroconductive auxiliary material include carbonaceous fine particles such as graphite, carbon black, and acetylene black.

### <Electrolyte liquid>

An electrolyte liquid used in an exemplary embodiment of the invention should not particularly be limited, but contains a supporting salt and a nonaqueous electrolyte solvent, for example.

Examples of the nonaqueous electrolyte solvent include, but should not particularly be limited to, for example, non-protic organic solvents such as: cyclic-type carbonates such as ethylene carbonate (EC), propylene carbonate (PC), butylene carbonate (BC), vinylene carbonate (VC), and vinylethylene carbonate (VEC); linear-type carbonates such as dimethyl carbonate (DMC), diethyl carbonate (DEC), ethyl methyl carbonate (EMC), and dipropyl carbonate (DPC); propylene carbonate derivatives; and aliphatic carboxylates such as methyl formate, methyl acetate, and ethyl propionate. As the nonaqueous electrolyte solvent, cyclic-type or linear-type carbonates such as ethylene carbonate (EC), propylene carbonate (PC), butylene carbonate (BC), vinylene carbonate (VC), dimethyl carbonate (DMC), diethyl carbonate (DEC), ethyl methyl carbonate (EMC), and dipropyl carbonate (DPC) are preferable. The nonaqueous electrolyte solvent can be used alone, or in combination with two or more kinds of electrolyte solvents.

Also, examples of the nonaqueous electrolyte solvent additionally include, for example, ethylene sulfite (ES), propane sultone (PS), butane sultone (BS), Dioxathiolane-2,2-dioxide (DD), sulfolene, 3-methyl sulfolene, sulfolane (SL), succinic anhydride (SUCAH), propionic anhydride, acetic anhydride, maleic anhydride, diallyl carbonate (DAC), diphenyl disulfide (DPS), dimethoxyethane (DME), dimethoxymethane (DMM), diethoxyethane (DEE), ethoxymethoxyethane, dimethyl ether, methyl ethyl ether, methyl propyl ether, ethyl propyl ether, dipropyl ether, methyl butyl ether, diethyl ether, phenyl methyl ether, tetrahydrofuran (THF), tetrahydropyran (THP), 1,4-dioxane (DIOX), 1,3-dioxolane (DOL), acetonitrile, propionitrile, γ-butyrolactone and γ-valerolactone.

Examples of the supporting salt include, but should not particularly be limited to, for example, LiPF₆, LiI, LiBr, LiCl, LiAsF₆, LiAlCl₄, LiClO₄, LiBF₄, LiSbF₆, LiCF₃SO₃, LiC₄F₉SO₃, LiN(FSO₂)₂, LiN(CF₃SO₂)₂, LiN(C₂F₅SO₂)₂, LiN(CF₃SO₂)(C₂F₅SO₂), LiN(CF₃SO₂)(C₄F₉SO₂), and cyclic-type LiN(CF₂SO₂)₂ and LiN(CF₂SO₂)₂(CF₂). Also, examples of the supporting salt additionally include, for example, LiPF₅(CF₃), LiPF₅(C₂F₅), LiPF₅(C₃F₇), LiPF₄(CF₃)₂, LiPF₄(CF₃)(C₂F₅) and LiPF₃(CF₃)₃, in which at least one fluorine atom of LiPF₆ is replaced by a fluorinated alkyl group.

Also, examples of the lithium salt include a salt consisting of the compound represented by formula (6): 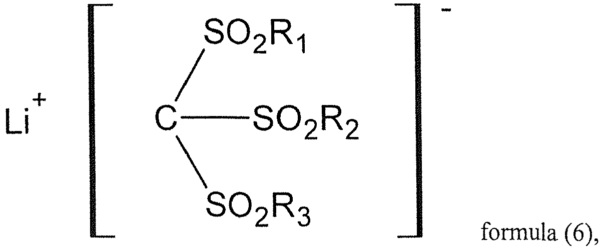 wherein, in formula (6), R₁, R₂ and R₃ are selected from the group consisting of halogen atoms and fluorinated alkyl groups, and may be different from each other or may be the same. Examples of the compound represented by formula (6) include LiC(CF₃SO₂)₃ and LiC(C₂F₅SO₂)₃.

The supporting salt can be used alone, or in combination with two or more kinds of materials.

The concentration of the lithium salt is, but should not particularly be limited to, for example, 0.01 M (mol/L) or more and 3 M (mol/L) or less in the electrolyte liquid. Also, the concentration of the lithium salt is preferably 0.5 M (mol/L) or more and 1.5 M (mol/L) or less in the electrolyte liquid.

Also, in an exemplary embodiment of the invention, the nonaqueous electrolyte solvent preferably contains a fluorinated carbonate.

The fluorinated carbonate includes cyclic-type and linear-type, and specific examples thereof include fluorinated cyclic-type carbonates and fluorinated linear-type carbonates. Also, it is preferably a fluorinated cyclic-type carbonate.

The fluorinated cyclic-type carbonate should not particularly be limited, but compounds in which a part of ethylene carbonate, propylene carbonate, vinylene carbonate or vinylethylene carbonate is substituted by fluorine can be used. More specifically, for example, 4-fluoro-1,3-dioxolane-2-one (fluoroethylene carbonate, hereinafter, also referred to as FEC), (cis- or trans-)4,5-difluoro-1,3-dioxolane-2-on, 4,4-difluoro-1,3-dioxolane-2-one and 4-fluoro-5-methyl-1,3-dioxolane-2-one can be used. Among these, fluoroethylene carbonate is preferable.

Also, examples of the fluorinated carbonate include compounds overlapping with the above-mentioned description, but preferably include a compound represented by following formula (7):

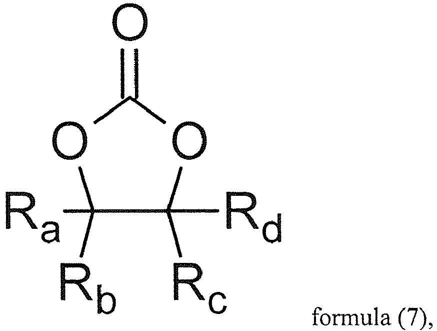

Wherein, in formula (7), Rₐ, R_{b}, R_{c} and R_{d} are each independently hydrogen atom, fluorine atom or a fluorine-containing alkyl group, and at least one of Rₐ, R_{b}, R_{c} and R_{d} is fluorine atom or a fluorine-containing alkyl group.

The fluorine-containing alkyl group has at least one fluorine atom, and is preferably in a state where all hydrogen atoms of the alkyl group are substituted by fluorine atom. Also, the fluorine-containing alkyl group includes a straight-chain type or a branched-chain type, and preferably has a carbon number of 1 to 5.

The fluorinated linear-type carbonate should not particularly be limited, but compounds in which a part or all hydrogen of dimethyl carbonate, diethyl carbonate, ethyl methyl carbonate, dipropyl carbonate or methyl propyl carbonate is replaced by fluorine can be used. More specific examples thereof include, for example, bis(fluoroethyl) carbonate, 3-fluoropropyl methyl carbonate and 3,3,3-trifluoropropyl methyl carbonate.

Also, examples of the fluorinated linear-type carbonate include compounds overlapping with the above-mentioned description, but preferably include a compound represented by following formula (8):

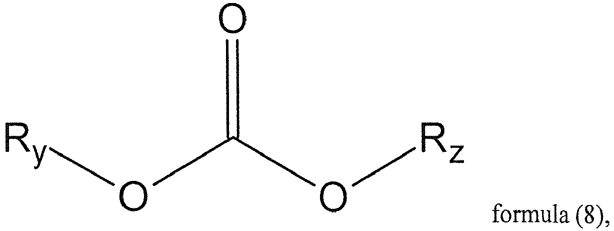

Wherein, in formula (8), R_{y} and R_{z} are each independently hydrogen atom or a fluorine-containing alkyl group, and at least one of R_{y} and R_{z} is fluorine atom or a fluorine-containing alkyl group.

The fluorine-containing alkyl group has at least one fluorine atom, and is preferably in a state where all hydrogen atoms of the alkyl group are substituted by fluorine atom. Also, the fluorine-containing alkyl group includes straight-chain type or branched-chain type, and preferably has a carbon number of 1 to 5.

The content of the fluorinated carbonate is preferably 0.01 mass% or more and 50 mass% or less in the nonaqueous electrolyte solvent. When a fluorinated carbonate is contained in an electrolyte liquid, the discharge capacity becomes large, but when there is too much fluorinated carbonate, the tendency is for the viscosity in the electrolyte liquid to become high, which leads to an increase in the resistance. Therefore, the content of the fluorinated carbonate is preferably 1 mass% or more and 30 mass% or less in the nonaqueous electrolyte solvent, and is more preferably 2 mass% or more and 10 mass% or less.

The nonaqueous electrolyte solvent preferably contains a carbonate other than fluorinated carbonates (hereinafter, also referred to as non-fluorinated carbonate) and a fluorinated carbonate. By using a non-fluorinated carbonate, the ion dissociation of the electrolyte liquid is improved, and the viscosity of the electrolyte liquid is also decreased. Therefore, ion mobility can be improved. The non-fluorinated carbonate includes cyclic-type and linear-type (non-fluorinated) as mentioned above. In this case, the nonaqueous electrolyte solvent preferably contains a non-fluorinated carbonate as a main solvent, and more preferably contains 70 to 99.9 mass% of a non-fluorinated carbonate and 0.1 to 15 mass% of a fluorinated carbonate.

Also, the nonaqueous electrolyte solvent preferably contains a phosphate as a main solvent. This is because, by using a phosphate as a main solvent, the compatibility of a separator of an exemplary embodiment of the invention with the nonaqueous electrolyte solvent becomes good and the nonaqueous electrolyte solvent is easily absorbed into a separator of an exemplary embodiment of the invention, and the ion conductivity is improved. Examples of the phosphate include, for example, trimethyl phosphate, triethyl phosphate, tripropyl phosphate, trioctyl phosphate and triphenyl phosphate. The content of the phosphate in the nonaqueous electrolyte solution is, for example, 70 mass% or more, and is preferably 80 mass% or more. Also, trifluoroethyl phosphate in which an alkyl phosphate is partially fluorinated may be used.

The nonaqueous electrolyte solution preferably contains a phosphate as a main solvent and a fluorinated carbonate. In this case, the nonaqueous electrolyte solution preferably contains 70 to 99.9 mass% of a phosphate and 0.1 to 15 mass% of a fluorinated carbonate.

Also, for example, trimethyl phosphate, triethyl phosphate, tripropyl phosphate, trioctyl phosphate, triphenyl phosphate, a fluorinated ether having an Rᵥ₁-O-Rᵥ₂ structure (Rᵥ₁ and Rᵥ₂ are respectively an alkyl group or a fluorine alkyl group), an ionic liquid, or a phosphazene can be mixed with the electrolyte liquid to improve the flame-retardant effect.

Desirably, the amount of the electrolyte liquid is appropriately adjusted based on the porosities of the positive electrode, the negative electrode and the separator. When the total of the porosity volumes of the positive electrode, the negative electrode and the separator is 1.0, the amount of the electrolyte liquid is preferably 0.2 or more and 2.0 or less and is more preferably 0.5 or more and 1.5 or less. Also, from the standpoint of making it easier to suppress the gas generation at high temperature, the amount of the electrolyte liquid is further preferably 1.2 or less and is particularly preferably 1.0 or less.

### <Package>

The package can appropriately be selected as long as it has stability against the electrolyte liquid and has sufficient moisture barrier property. For example, in the case of the stacked laminate type secondary battery, a laminate film of a polypropylene, polyethylene or the like which is coated with aluminum or silica can be used as the package. In particular, an aluminum laminate film is preferably used from a viewpoint of suppressing volume expansion.

### (EXAMPLES)

As follows, an exemplary embodiment of the invention is more concretely explained by the Examples.

### (Production Example 1)

### <Phosphate treatment method of cellulose separator>

A cellulose separator (produced by NIPPON KODOSHI CORPORATION, thickness; 25 µm, nonwoven cloth: porosity 71 %, TF4425) was immersed in 20 parts by mass of triethyl phosphate, and was heated and controlled so as to be at 110°C. Then, 6 parts by mass of water was added slowly, and it was heat-treated for 1 hour so that the temperature of the solution became 110°C. After water was sufficiently evaporated, the separator treated with the phosphate was taken out and was dried overnight. Hereinafter, the separator obtained is also referred to as phosphate cellulose separator.

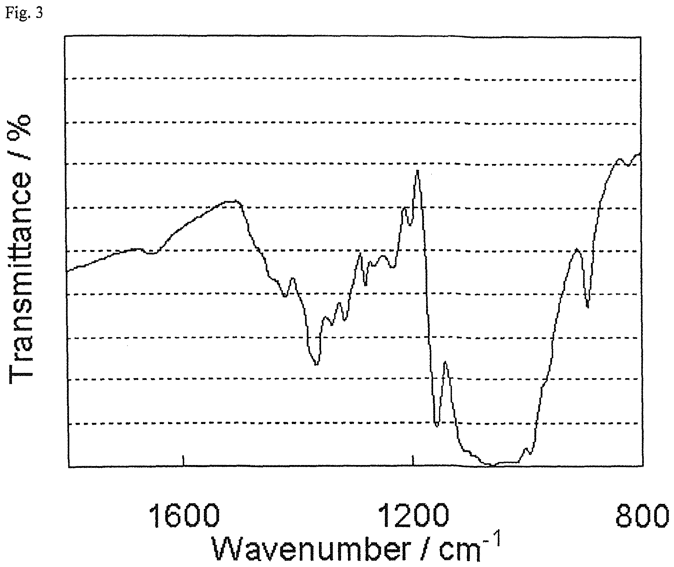

The phosphate cellulose separator was washed with chloroform and was sufficiently vacuum-dried, and it was then measured by IR. The IR spectrum is shown in FIG. 2. As a comparison, the IR spectrum of the cellulose separator before the phosphate treatment is shown in FIG. 3. The IR measurement was carried out by transmission measurement using an apparatus manufactured by JASCO Corporation under the conditions of the resolution of 4 cm⁻¹ and the scan time of 500 times.

In the IR spectrum (FIG. 2) of the phosphate cellulose separator, peaks were detected at 825 cm⁻¹ and 1640 cm⁻¹, in comparison with the IR spectrum (FIG. 3) of the cellulose separator. Also, an absorption peak at 1253 cm⁻¹ (P=O stretching vibration) was also detected. Since these peaks are inherent peaks in phosphates, it can be recognized that the hydroxy group of the cellulose becomes a phosphate.

Also, the thermal stability of the phosphate cellulose separator was evaluated as shown in follows.

### (Production Example 2)

### <Phosphate treatment method of inorganic material-containing separator>

An inorganic material-containing separator (produced by Sawada Chemical (flame-retardant mesh #30), thickness 32 µm, mesh type; note that, the inorganic material-containing separator used in this Example is a separator obtained by spraying an aqueous solution containing an amide sulfate (Sawada Chemical; Not Burn) on a glass cross obtained by weaving a glass fiber (Sawada Chemical; flame-retardant mesh) by a spray for surface treatment) was immersed in 20 parts by mass of triethyl phosphate, and was heated and controlled so as to be at 110°C. Then, 6 parts by mass of water was added slowly, and it was heat-treated for 1 hour so that the temperature of the solution became 110°C. After water was sufficiently evaporated, the separator treated with the phosphate was taken out and was dried overnight. The thermal stability of the separator obtained (hereinafter, also abbreviated to phosphate inorganic material separator) was evaluated as shown in follows.

### (Thermal stability test of separator)

First, the thermal stability tests of the phosphate cellulose separator and the phosphate inorganic material separator were carried out by the following method.

Each separator was placed on a heater warmed to 120°C, and after 1 hour the area was measured. And, the thermal shrinkage ratio was calculated from the area values before and after the separator was placed in a high-temperature environment, and the results are shown in TABLE 1.

Also, as a Reference Comparative Example, the thermal stability test of a separator composed of a polyethylene (produced by Celgard, LLC, film thickness; 23 µm, porosity 50 %) was carried out in the same manner and the thermal shrinkage ratio was calculated (TABLE 1).

The thermal shrinkage ratio is defined by (thermal shrinkage ratio) = [(area before heating of separator) - (area after heating of separator)] / (area before heating of separator) × 100].

**TABLE 1**

| | type of separator | thermal shrinkage ratio (%) |
|---|---|---|
| Prod. Ex. 1 | phosphate cellulose separator | 1 |
| Prod. Ex. 2 | phosphate inorganic material separator | 0 |
| Ref. Comp. Ex. 1 | polyethylene separator | 36 |

It is found that the phosphate cellulose separator has a smaller thermal shrinkage ratio in high-temperature environment and higher thermal stability compared with the polyethylene separator.

From the above-mentioned results, it is found that the use of a phosphate cellulose separator having high thermal stability can suppress the increase in the size of area where short-circuit occurs due to thermal shrinkage when abnormal heat is generated in a battery.

It is found that the same effects as these effects observed in the phosphate cellulose separator are also obtained in the phosphate inorganic material separator (Production Example 2).

### (Example 1)

### <Performance evaluation of secondary battery>

Next, a secondary battery was produced using a phosphate cellulose separator.

CVD treatment was carried out in an atmosphere containing methane gas at 1150°C for 6 hours to obtain silicon / silicon oxide / carbon complex (hereinafter, also referred to as Si/SiO/C complex). The Si/SiO/C complex had the conformation in which the surface of the particle that consists of silicon and silicon oxide was coated with carbon. Also, silicon was in the state of a nanocluster in silicon oxide. Also, the mass ratio of Si/SiO/C was adjusted so as to become approximately 29/61/10.

The above-mentioned negative electrode active substance (average particle diameter D₅₀ = 5 µm) and a polyimide (produced by UBE INDUSTRIES, trade name: U varnish A) as a negative electrode binder were weighed at a mass ratio of 90:10, and they were mixed with n-methylpyrrolidone to prepare a negative electrode slurry. The negative electrode slurry was applied on a copper foil having a thickness of 10 µm and was then dried, and it was further heat-treated in a nitrogen atmosphere at 300°C to produce a negative electrode.

A lithium nickelate (LiNi_{0.80}Co_{0.15}Al_{0.15}O₂) as a positive electrode active substance, carbon black as an electroconductive auxiliary material, and a polyvinylidene fluoride as a positive electrode binder were weighed at a mass ratio of 90:5:5, and they were mixed with n-methylpyrrolidone to prepare a positive electrode slurry. The positive electrode slurry was applied on an aluminum foil having a thickness of 20 µm and was then dried, and it was further pressed to produce a positive electrode.

3 layers of the obtained positive electrode and 4 layers of the obtained negative electrode were alternately stacked with the above-mentioned phosphate cellulose separator placed therebetween. End parts of the positive electrode collectors which were not covered with the positive electrode active substance and end parts of the negative electrodes collectors which were not covered with the negative electrode active substance were respectively welded. Further, an aluminum positive electrode lead terminal and a nickel negative electrode lead terminal were respectively welded thereto, to obtain an electrode assembly which had a planar stacking structure.

Also, a liquid obtained by dissolving LiPF₆ as the supporting salt in a concentration of 1 mol/L in a nonaqueous electrolyte solvent consisting of EC:DEC (30:70) was used as the electrolyte liquid.

The above-mentioned electrode assembly was enclosed in an aluminum lamination film as a package and the electrolyte liquid was poured thereinto, and it was then sealed with depressurization to 0.1 atm to produce a secondary battery.

The first discharge capacity of the secondary battery produced as mentioned above was measured. The conditions of the first charge and discharge were set to be a current of 0.2 C, an environment of 20°C, an upper limit of 4.2 V and a lower limit of 2.5 V. The discharge capacity measured is shown in TABLE 2.

Next, an aluminum laminate cell was produced by placing 1 layer of the positive electrode and 1 layer of the negative electrode through a phosphate cellulose separator, and by pouring an electrolyte liquid. The conditioning of the cell produced was carried out, and it was then charged to the upper limit voltage of 4.3 V at a current of 0.2 C. A weight having a weight of 5 kg was dropped from the height of 50 cm over the cell in a charged state to make an impact on the cell. After the impact was made to the cell, the temperature of the cell was measured by a thermocouple attached outside of the cell. The amount of temperature increase in the cell was calculated from the maximum temperature after the impact test and the cell temperature before the impact test, and it is shown in TABLE 2.

### (Example 2)

A secondary battery and a cell were produced in the same manner as Example 1 except that a solvent obtained by mixing 2 mass% of fluoroethylene carbonate with EC:DEC (30:70) was used as the nonaqueous electrolyte solvent, and were evaluated.

### (Example 3)

A secondary battery and a cell were produced in the same manner as Example 1 except that a solvent obtained by mixing 5 mass% of fluoroethylene carbonate with EC:DEC (30:70) was used as the nonaqueous electrolyte solvent, and were evaluated.

### (Example 4)

A secondary battery and a cell were produced in the same manner as Example 1 except that a solvent obtained by mixing 10 mass% of fluoroethylene carbonate with EC:DEC (30:70) was used as the nonaqueous electrolyte solvent, and were evaluated.

### (Example 5)

A secondary battery and a cell were produced in the same manner as Example 1 except that the phosphate inorganic material separator treated as mentioned above was used instead of the phosphate cellulose separator, and were evaluated.

### (Example 6)

A secondary battery and a cell were produced in the same manner as Example 5 except that a solvent obtained by mixing 2 mass% of fluoroethylene carbonate with EC:DEC (30:70) was used as the nonaqueous electrolyte solvent, and were evaluated.

### (Example 7)

A secondary battery and a cell were produced in the same manner as Example 5 except that a solvent obtained by mixing 2 mass% of fluoroethylene carbonate with triethyl phosphate (hereinafter, also abbreviated to TEP) was used as the nonaqueous electrolyte solvent, and were evaluated.

### (Example 8)

A secondary battery and a cell were produced in the same manner as Example 5 except that a solvent obtained by mixing 5 mass% of fluoroethylene carbonate with TEP was used as the nonaqueous electrolyte solvent, and were evaluated.

### (Comparative Example 1)

A secondary battery and a cell were produced in the same manner as Example 1 except that a polyethylene separator was used instead of the phosphate cellulose separator, and were evaluated.

### (Comparative Example 2)

A secondary battery and a cell were produced in the same manner as Example 1 except that a cellulose separator (a separator before the treatment with a phosphate) was used instead of the phosphate cellulose separator, and were evaluated.

### (Comparative Example 3)

A secondary battery and a cell were produced in the same manner as Comparative Example 2 except that a solvent obtained by mixing 5 mass% of fluoroethylene carbonate with EC:DEC (30:70) was used as the nonaqueous electrolyte solvent, and were evaluated.

### (Comparative Example 4)

A secondary battery and a cell were produced in the same manner as Example 1 except that an inorganic material-containing separator (a separator before the treatment with a phosphate) was used instead of the phosphate cellulose separator, and were evaluated.

### (Comparative Example 5)

A secondary battery and a cell were produced in the same manner as Comparative Example 4 except that a solvent obtained by mixing 2 mass% of fluoroethylene carbonate with TEP was used as the nonaqueous electrolyte solvent, and were evaluated.

**TABLE 2**

| | Separator | nonaqueous electrolyte solvent | | | | first discharge capacity (mAh) | the amount of temperature increase in the cell (°C) |
|---|---|---|---|---|---|---|---|
| Ex. 1 | phosphate cellulose separator | EC/DEC | 100% | - | - | 1486 | 4 |
| Ex. 2 | phosphate cellulose separator | EC/DEC | 98% | FEC | 2% | 1581 | 3 |
| Ex. 3 | phosphate cellulose separator | EC/DEC | 95% | FEC | 5% | 1586 | 3 |
| Ex. 4 | phosphate cellulose separator | EC/DEC | 90% | FEC | 10% | 1571 | 4 |
| Ex. 5 | phosphate inorganic material separator | EC/DEC | 100% | - | - | 1574 | 2 |
| Ex. 6 | phosphate inorganic material separator | EC/DEC | 98% | FEC | 2% | 1618 | 2 |
| Ex. 7 | phosphate inorganic material separator | TEP | 98% | FEC | 2% | 1612 | 1 |
| Ex. 8 | phosphate inorganic material separator | TEP | 95% | FEC | 5% | 1624 | 2 |
| Comp. Ex. 1 | polyethylene separator | EC/DEC | 100% | - | - | 2450 | 26 |
| Comp. Ex. 2 | cellulose separator | EC/DEC | 100% | - | - | 1201 | 8 |
| Comp. Ex. 3 | cellulose separator | EC/DEC | 95% | FEC | 5% | 1225 | 7 |
| Comp. Ex. 4 | inorganic material-containing separator | EC/DEC | 100% | - | - | 1328 | 3 |
| Comp. Ex. 5 | inorganic material-containing separator | TEP | 98% | FEC | 2% | 1317 | 2 |

As follows, these results are considered. Note that, the present invention is not limited to the following discussion.

In the case of using a cellulose separator, the first discharge capacity is lower in compared with using a polyethylene separator (Comparative Example 1 and Comparative Example 2). This is thought to be because the hydroxy group of the cellulose separator may react with the positive electrode or the negative electrode, which leads to a decrease of the capacity. However, in the impact test, in the case of using a cellulose separator, the increase in cell temperature was lower compared with using a polyethylene separator. This is thought to be because thermal resistance of the cellulose separator is higher than that of polyethylene separator and thus thermal shrinkage due to abnormal heat generation is small. Also, in the case of using an inorganic material-containing separator, since thermal stability is further higher, it is found that the amount of temperature increase in the cell becomes low (Comparative Example 4).

Also, from Example 1, in the case of using a phosphate cellulose separator, the first discharge capacity is improved compared with a cellulose separator (Example 1 and Comparative Example 2). This is thought to be because the phosphoric acid residue having high oxidation resistance is introduced into the cellulose separator, which leads to suppression of oxidative decomposition at the time of charge. The same tendency is observed in a phosphate inorganic material separator (Examples 5 and 6). In particular, in the case of using a phosphate as the electrolyte liquid, the increase in cell temperature becomes low and a first discharge capacity equivalent to that in the case of using a carbonate is obtained. The reason for this is thought to be because the electrolyte liquid containing a phosphate has good compatibility with the phosphate inorganic material separator, and thereby the absorption of the electrolyte liquid into the separator is improved and the ion conductivity is improved. In the case of using a phosphate cellulose separator, it is thought that the compatibility with the phosphate is good, and thereby the absorption of the electrolyte liquid into the separator is improved.

Also, the first discharge capacity is further improved by adding a fluorinated carbonate to the electrolyte liquid (Examples 2, 3 and 4). The reason for this is thought to be because the fluorinated carbonate forms a coating on the surface of the negative electrode at the time of charge to suppress the reductive decomposition of the phosphoric acid residue. Therefore, in the case of using a phosphate cellulose separator, it is preferable to mix a fluorinated carbonate in the electrolyte liquid. This is thought to function in the same manner as in the case of using a phosphate inorganic material separator (Examples 5 and 6).

Also, it has been found that the increase in temperature after the impact test is further decreased by using a phosphate cellulose (Example 1). The reason for this is thought to be because it has a cellulose structure and thereby has high thermal stability and additionally because of the action of the mechanism for suppressing the increase in temperature due to a phosphoric acid residue. The temperature increasing inhibition mechanism by a phosphoric acid residue is presumed to be due to the following mechanism. At first, by introducing a bulky phosphoric acid residue into the hydroxyl group portion of the cellulose, absorption of the electrolyte liquid is slightly decreased. Then, the resistance is increased by decreasing absorption of the electrolyte liquid. As a result, it is thought that ion conductivity at the time of impact is decreased and that the generation of Joule heat is suppressed. Alternatively, it is also thought that the temperature is increased at the portion of the impact, and the radical trap effect by the thermal decomposition of the phosphoric acid residue is generated.

In general, if the cell temperature is increased too high, the deterioration of the active substance and lack of liquid due to the evaporation of the electrolyte liquid occur, which is undesirable. Also, if there is a drastic temperature increase due to the impact, in the case where the battery is embedded in the device, there is a concern that the IC circuit or the peripheral device is negatively affected. Therefore, the cell in which the temperature increase due to impact is also small is preferable from the point that it is not necessary to install a device such as a thermal control unit, which is desirable.

The present invention was explained with reference to embodiments and Examples, but the present invention is not limited to the above-mentioned embodiments and the Examples. In the constructions and the detail of the present invention, various changes which are understood by a person ordinarily skilled in the art can be made within the scope of the invention as defined in the appended claims.

### "Additional Statement"

### (Additional Statement 1)

A separator for an electric storage device, comprising a cellulose derivative represented by formula (1): 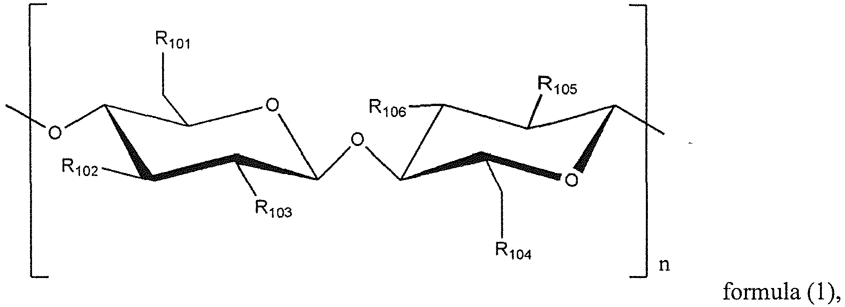 wherein, in formula (1), R₁₀₁ to R₁₀₆ each independently represent hydroxy group, a phosphoric acid residue or a phosphorous acid residue, and at least one of R₁₀₁ to R₁₀₆ is a phosphoric acid residue or a phosphorous acid residue; and n is an integer number of 2 or more, and R₁₀₁ to R₁₀₆ is respectively independent in every n.

### (Additional Statement 2)

The separator for an electric storage device according to Additional Statement 1, wherein the phosphoric acid residue is represented by formula (2) and the phosphorous acid residue is represented by formula (3): 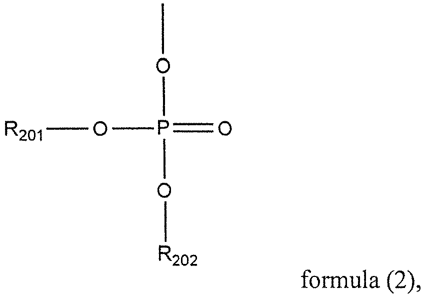 wherein, in formula (2), R₂₀₁ and R₂₀₂ each independently represent hydrogen atom, a substituted or non-substituted alkyl group or a substituted or non-substituted aryl group; and 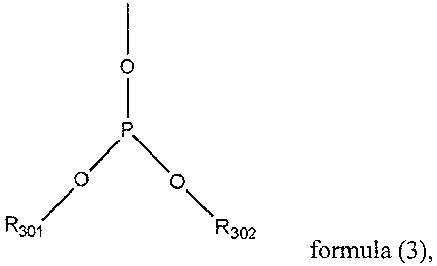 wherein, in formula (3), R₃₀₁ and R₃₀₂ each independently represent hydrogen atom, a substituted or non-substituted alkyl group or a substituted or non-substituted aryl group.

### (Additional Statement 3)

A separator for an electric storage device, wherein a hydroxy group on a fiber surface of a cellulose separator whose main component is a cellulose fiber is replaced by a phosphoric acid residue or a phosphorous acid residue.

### (Additional Statement 4)

The separator for an electric storage device according to Additional Statement 3, wherein the phosphoric acid residue is represented by formula (4) and the phosphorous acid residue is represented by formula (5): 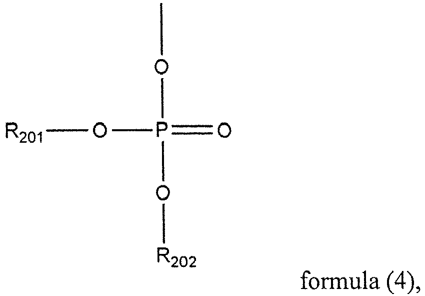 wherein, in formula (4), R₂₀₁ and R₂₀₂ each independently represent hydrogen atom, a substituted or non-substituted alkyl group or a substituted or non-substituted aryl group; and 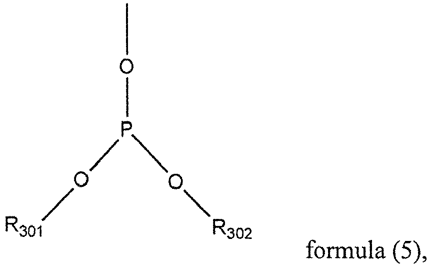 wherein, in formula (5), R₃₀₁ and R₃₀₂ each independently represent hydrogen atom, a substituted or non-substituted alkyl group or a substituted or non-substituted aryl group.

### (Additional Statement 5)

The separator for an electric storage device according to Additional Statement 3 or 4, wherein the cellulose separator contains 30 mass% or more of the cellulose fiber.

### (Additional Statement 6)

A separator for an electric storage device, wherein a hydroxy group on a fiber surface of an inorganic material-containing separator whose main component is an inorganic fiber is replaced by a phosphoric acid residue or a phosphorous acid residue.

### (Additional Statement 7)

The separator for an electric storage device according to Additional Statement 6, wherein the phosphoric acid residue is represented by formula (6) and the phosphorous acid residue is represented by formula (7): 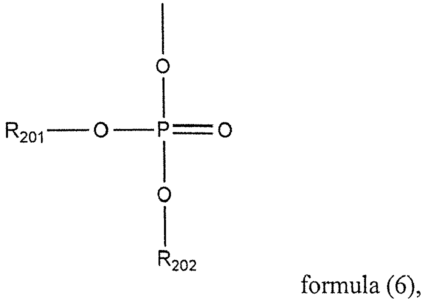 wherein, in formula (6), R₂₀₁ and R₂₀₂ each independently represent hydrogen atom, a substituted or non-substituted alkyl group or a substituted or non-substituted aryl group; and 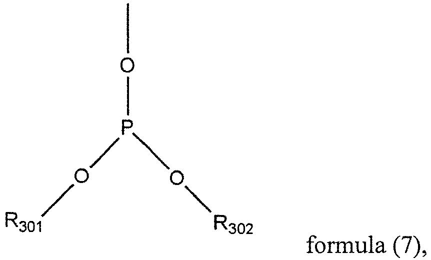 wherein, in formula (7), R₃₀₁ and R₃₀₂ each independently represent hydrogen atom, a substituted or non-substituted alkyl group or a substituted or non-substituted aryl group.

### (Additional Statement 8)

The separator for an electric storage device according to Additional Statement 6 or 7, wherein the inorganic material-containing separator contains 30 mass% or more of the inorganic fiber.

### (Additional Statement 9)

An electric storage device, comprising the separator for an electric storage device according to any one of Additional Statements 1 to 8, a negative electrode comprising a negative electrode active substance, and an electrolyte liquid comprising a supporting salt and a nonaqueous electrolyte solvent.

### (Additional Statement 10)

The electric storage device according to Additional Statement 9, wherein the negative electrode active substance is at least one selected from silicone and silicone oxide.

### (Additional Statement 11)

The electric storage device according to Additional Statement 10, wherein the negative electrode active substance comprises silicone, silicone oxide and carbon material.

### (Additional Statement 12)

The electric storage device according to any one of Additional Statements 9 to 11, wherein the nonaqueous electrolyte solvent comprises a fluorinated carbonate.

### (Additional Statement 13)

The electric storage device according to any one of Additional Statements 9 to 12, wherein the nonaqueous electrolyte solvent comprises a phosphate as a main solvent.

### (Additional Statement 14)

A method for producing a separator for an electric storage device, comprising making a cellulose separator, whose main component is cellulose, come into contact with a solution comprising a phosphate or a phosphite, and water.

### (Additional Statement 15)

The method for producing a separator for an electric storage device according to Additional Statement 14, wherein the phosphate is represented by formula (8) and the phosphite is represented by formula (9): 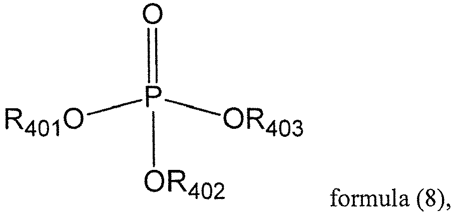 wherein, in formula (8), R₄₀₁ to R₄₀₃ each independently represent hydrogen atom, a substituted or non-substituted alkyl group or a substituted or non-substituted aryl group, and any of R₄₀₁ to R₄₀₃ is a substituted or non-substituted alkyl group or a substituted or non-substituted aryl group; and 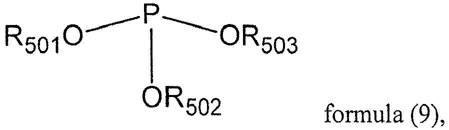 wherein, in formula (9), R₅₀₁ to R₅₀₃ each independently represent hydrogen atom, a substituted or non-substituted alkyl group or a substituted or non-substituted aryl group, and any of R₅₀₁ to R₅₀₃ is a substituted or non-substituted alkyl group or a substituted or non-substituted aryl group.

### (Additional Statement 16)

The method for producing a separator for an electric storage device according to Additional Statement 14 or 15, comprising making the cellulose separator come into contact with the solution to substitute the hydroxy group of the cellulose with the phosphoric acid residue or the phosphorous acid residue.

### (Additional Statement 17)

The method for producing a separator for an electric storage device according to Additional Statement 16, wherein the phosphoric acid residue is represented by formula (10) and the phosphorous acid residue is represented by formula (11): 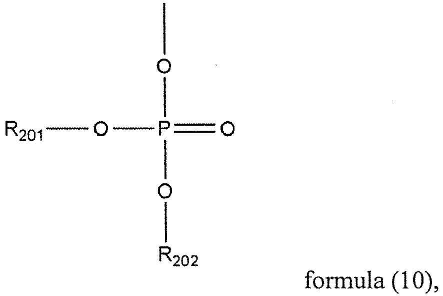 wherein, in formula (10), R₂₀₁ and R₂₀₂ each independently represent hydrogen atom, a substituted or non-substituted alkyl group or a substituted or non-substituted aryl group; and 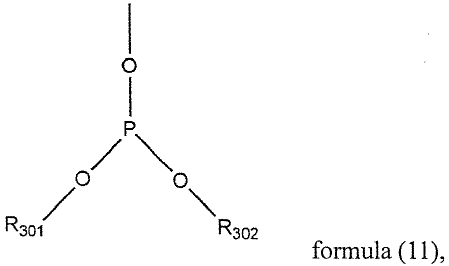 wherein, in formula (11), R₃₀₁ and R₃₀₂ each independently represent hydrogen atom, a substituted or non-substituted alkyl group or a substituted or non-substituted aryl group.

### (Additional Statement 18)

The method for producing a separator for an electric storage device according to any one of Additional Statements 14 to 17, comprising carrying out heat treatment in a state where the cellulose separator is made to contact with the solution.

### (Additional Statement 19)

The method for producing a separator for an electric storage device according to Additional Statement 18, wherein a temperature of the solution is set to be 70°C or higher and 150°C or lower by the heat treatment.

### (Additional Statement 20)

The method for producing a separator for an electric storage device according to any one of Additional Statements 14 to 19, wherein the cellulose separator is immersed in the phosphate or the phosphite and thereafter the water is added.

### (Additional Statement 21)

The method for producing a separator for an electric storage device according to Additional Statement 20, wherein the water is added in a state of controlling a temperature of the phosphate or the phosphite in which the cellulose separator is immersed by heating.

### (Additional Statement 22)

The method for producing a separator for an electric storage device according to any one of Additional Statements 14 to 21, wherein an amount of the water is 1 part by mass or more and 40 parts by mass or less with respect to 100 parts by mass of the phosphate or the phosphite.

### (Additional Statement 23)

A method for producing a separator for an electric storage device, comprising making an inorganic material-containing separator, which comprises an inorganic fiber comprising a hydroxy group on a surface thereof, come into contact with a solution comprising a phosphate or a phosphite, and water.

### (Additional Statement 24)

The method for producing a separator for an electric storage device according to Additional Statement 23, wherein the phosphate is represented by formula (12) and the phosphite is represented by formula (13): 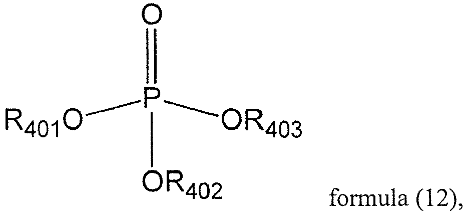 wherein, in formula (12), R₄₀₁ to R₄₀₃ each independently represent hydrogen atom, a substituted or non-substituted alkyl group or a substituted or non-substituted aryl group, and any of R₄₀₁ to R₄₀₃ is a substituted or non-substituted alkyl group or a substituted or non-substituted aryl group; and 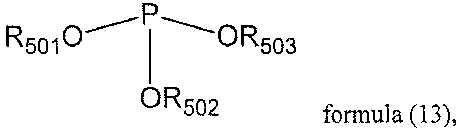 wherein, in formula (13), R₅₀₁ to R₅₀₃ each independently represent hydrogen atom, a substituted or non-substituted alkyl group or a substituted or non-substituted aryl group, and any of R₅₀₁ to R₅₀₃ is a substituted or non-substituted alkyl group or a substituted or non-substituted aryl group.

### (Additional Statement 25)

The method for producing a separator for an electric storage device according to Additional Statement 23 or 24, comprising making the inorganic material-containing separator come into contact with the solution to substitute the hydroxy group of the inorganic fiber with the phosphoric acid residue or the phosphorous acid residue.

### (Additional Statement 26)

The method for producing a separator for an electric storage device according to Additional Statement 25, wherein the phosphoric acid residue is represented by formula (14) and the phosphorous acid residue is represented by formula (15): 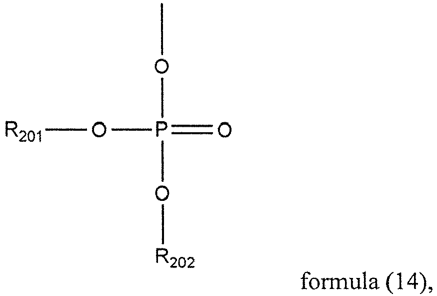 wherein, in formula (14), R₂₀₁ and R₂₀₂ each independently represent hydrogen atom, a substituted or non-substituted alkyl group or a substituted or non-substituted aryl group; and 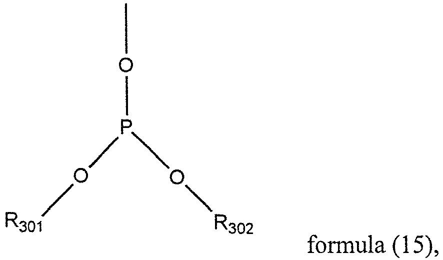 wherein, in formula (15), R₃₀₁ and R₃₀₂ each independently represent hydrogen atom, a substituted or non-substituted alkyl group or a substituted or non-substituted aryl group.

### (Additional Statement 27)

The method for producing a separator for an electric storage device according to any one of Additional Statements 23 to 26, wherein the inorganic fiber is alumina fiber, carbon fiber or glass fiber.

### (Additional Statement 28)

The method for producing a separator for an electric storage device according to any one of Additional Statements 23 to 28, comprising carrying out heat treatment in a state where the inorganic material-containing separator is made to contact with the solution.

### (Additional Statement 29)

The method for producing a separator for an electric storage device according to Additional Statement 28, wherein a temperature of the solution is set to be 70°C or higher and 150°C or lower by the heat treatment.

### (Additional Statement 30)

The method for producing a separator for an electric storage device according to any one of Additional Statements 23 to 29, wherein the inorganic material-containing separator is immersed in the phosphate or the phosphite and thereafter the water is added.

### (Additional Statement 31)

The method for producing a separator for an electric storage device according to Additional Statement 30, wherein the water is added in a state of controlling a temperature of the phosphate or the phosphite in which the inorganic material-containing separator is immersed by heating.

### (Additional Statement 32)

The method for producing a separator for an electric storage device according to any one of Additional Statements 23 to 31, wherein the solution further comprises an acid.

### (Additional Statement 33)

The method for producing a separator for an electric storage device according to Additional Statement 32, wherein the acid is concentrated sulfuric acid.

### (Additional Statement 34)

The method for producing a separator for an electric storage device according to any one of Additional Statements 23 to 33, wherein an amount of the water is 1 part by mass or more and 40 parts by mass or less with respect to 100 parts by mass of the phosphate or the phosphite.

### (Additional Statement 35)

An electric storage device, comprising a separator for an electric storage device produced by the production method according to any one of Additional Statements 14 to 34, a negative electrode comprising a negative electrode active substance, and an electrolyte liquid comprising a supporting salt and a nonaqueous electrolyte solvent.

### (Additional Statement 36)

The electric storage device according to Additional Statement 35, wherein the negative electrode active substance is at least one selected from silicone and silicone oxide.

### (Additional Statement 37)

The electric storage device according to Additional Statement 36, wherein the negative electrode active substance comprises silicone, silicone oxide and carbon material.

### (Additional Statement 38)

The electric storage device according to any one of Additional Statements 35 to 37, wherein the nonaqueous electrolyte solvent comprises a fluorinated carbonate.

### (Additional Statement 39)

The electric storage device according to any one of Additional Statements 35 to 37, wherein the nonaqueous electrolyte solvent comprises a phosphate as a main solvent.

### INDUSTRIAL APPLICABILITY

An exemplary embodiment of the invention can be utilized in every industrial field in need of a power supply and in an industrial field concerning transportation, storage and a supply of electrical energy. Specifically, it can be utilized, for examples, for a power supply of a mobile device such as a mobile phone and a laptop computer; a power supply of a moving or a transport medium such as a train, a satellite and a submarine, and which includes an electric vehicle such as an electric car, a hybrid car, an electric motorcycle and an electric power-assisted bicycle; a back-up power supply such as UPS; and a power storage device of an electric power which is generated by a solar power generation or a wind power generation.

### REFERENCE SIGNS LIST

- a: negative electrode
- b: separator
- c: positive electrode
- d: negative electrode collector
- e: positive electrode collector
- f: positive electrode lead terminal
- g: negative electrode lead terminal

## Claims

1. A lithium secondary battery, comprising:
a negative electrode comprising a negative electrode active substance;
a separator; and
an electrolyte liquid comprising a supporting salt and a nonaqueous electrolyte solvent,
wherein the separator comprises an inorganic fiber as a main component, **characterized in that** a hydroxyl group on a surface of the inorganic fiber is modified to a phosphoric acid residue or a phosphorous acid residue.

2. The lithium secondary battery according to claim 1, wherein the phosphoric acid residue is represented by formula (6) and the phosphorous acid residue is represented by formula (7): 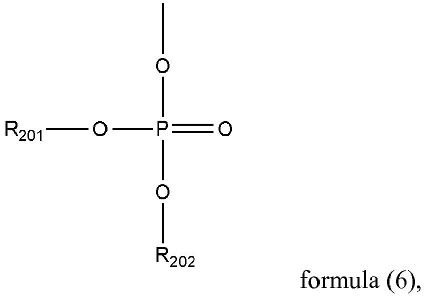 wherein, in formula (6), R₂₀₁ and R₂₀₂ each independently represent hydrogen atom, a substituted or non-substituted alkyl group or a substituted or non-substituted aryl group; and 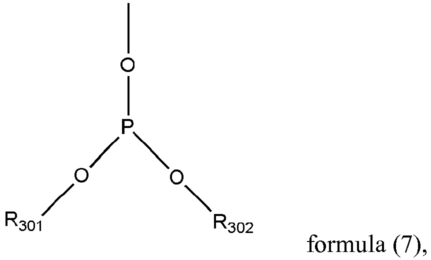 wherein, in formula (7), R₃₀₁ and R₃₀₂ each independently represent hydrogen atom, a substituted or non-substituted alkyl group or a substituted or non-substituted aryl group.

3. The lithium secondary battery according to claim 1 or 2, wherein the inorganic fiber is alumina fiber, carbon fiber or glass fiber.

4. The lithium secondary battery according to any one of claims 1 to 3, wherein the inorganic material-containing separator contains 30 mass% or more of the inorganic fiber.

5. A lithium secondary battery, including:
a negative electrode comprising a negative electrode active substance,
an electrolyte liquid comprising a supporting salt and a nonaqueous electrolyte solvent, and
a separator comprising a cellulose derivative represented by formula (1): 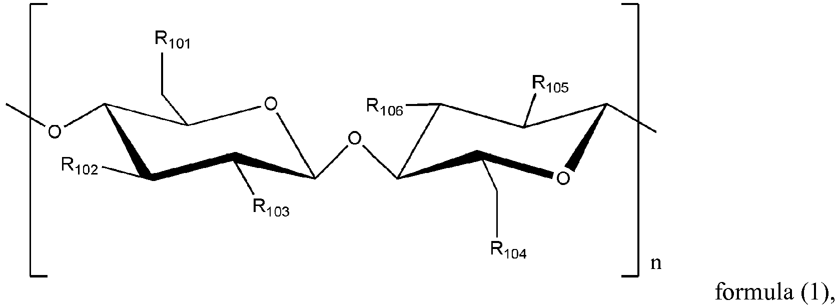 wherein, in formula (1), R₁₀₁ to R₁₀₆ each independently represent hydroxy group, a phosphoric acid residue or a phosphorous acid residue, and at least one of R₁₀₁ to R₁₀₆ is a phosphoric acid residue or a phosphorous acid residue; and n is an integer number of 2 or more, and R₁₀₁ to R₁₀₆ are respectively independent in every unit,
wherein the phosphoric acid residue is represented by formula (2) and the phosphorous acid residue is represented by formula (3) as shown below: 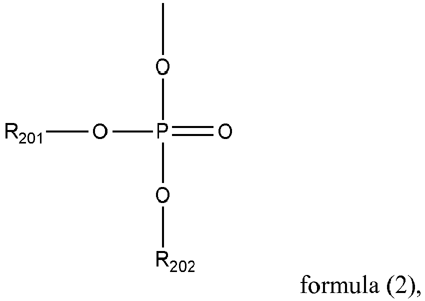 wherein, in formula (2), R₂₀₁ and R₂₀₂ each independently represent a substituted or non-substituted alkyl group or a substituted or non-substituted aryl group, 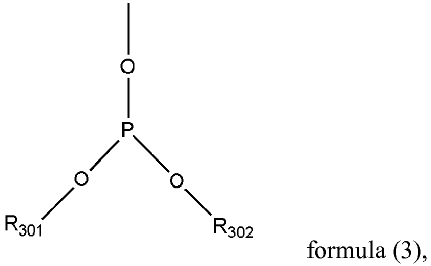 wherein, in formula (3), R₃₀₁ and R₃₀₂ each independently represent hydrogen atom, a substituted or non-substituted alkyl group or a substituted or non-substituted aryl group.

6. The lithium secondary battery according to claim 5, wherein the negative electrode active substance is at least one selected from silicon and silicon oxide.

7. The lithium secondary battery according to claim 5 or 6, wherein the nonaqueous electrolyte solvent comprises a fluorinated carbonate.

8. The lithium secondary battery according to any one of claims 5 to 7, wherein the nonaqueous electrolyte solvent comprises a phosphate as a main solvent.

9. The lithium secondary battery according to any one of claims 1 to 4, wherein the negative electrode active substance is at least one selected from silicone and silicone oxide.

10. The lithium secondary battery according to any one of claims 1 to 4 and 9, wherein the nonaqueous electrolyte solvent comprises a fluorinated carbonate.

11. The lithium secondary battery according to any one of claims 1 to 4, 9 and 10, wherein the nonaqueous electrolyte solvent comprises a phosphate as a main solvent.

12. A method for producing a lithium secondary battery according to claim 1, comprising making an inorganic material-containing separator, which comprises an inorganic fiber comprising a hydroxy group on a surface thereof, come into contact with a solution comprising a phosphate or a phosphite, and water.

13. The method according to claim 12, wherein the phosphate is represented by formula (12) and the phosphite is represented by formula (13): 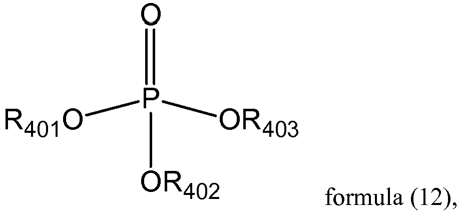 wherein, in formula (12), R₄₀₁ to R₄₀₃ each independently represent hydrogen atom, a substituted or non-substituted alkyl group or a substituted or non-substituted aryl group, and any of R₄₀₁ to R₄₀₃ is a substituted or non-substituted alkyl group or a substituted or non-substituted aryl group; and 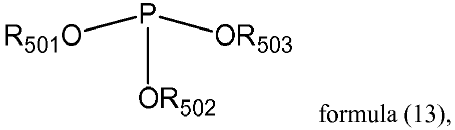 wherein, in formula (13), R₅₀₁ to R₅₀₃ each independently represent hydrogen atom, a substituted or non-substituted alkyl group or a substituted or non-substituted aryl group, and any of R₅₀₁ to R₅₀₃ is a substituted or non-substituted alkyl group or a substituted or non-substituted aryl group.

14. The method according to claim 12 or 13, comprising making the inorganic material-containing separator come into contact with the solution to modify the hydroxy group of the inorganic fiber to the phosphoric acid residue or the phosphorous acid residue.

15. The method according to any one of claims 12 to 14, wherein the inorganic fiber is alumina fiber, carbon fiber or glass fiber.

16. The method according to any one of claims 12 to 15, comprising carrying out heat treatment in a state where the inorganic material-containing separator is made to contact with the solution.

17. The method according to any one of claims 12 to 16, wherein the solution further comprises an acid.

18. A method for producing a lithium secondary battery according to claim 5, comprising making a cellulose separator, whose main component is cellulose, come into contact with a solution comprising a phosphate or a phosphite, and water.

19. The method according to claim 18, wherein the phosphate is represented by formula (8) and the phosphite is represented by formula (9): 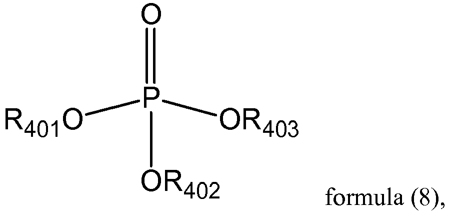 wherein, in formula (8), R₄₀₁ to R₄₀₃ each independently represent hydrogen atom, a substituted or non-substituted alkyl group or a substituted or non-substituted aryl group, and any of R₄₀₁ to R₄₀₃ is a substituted or non-substituted alkyl group or a substituted or non-substituted aryl group; and 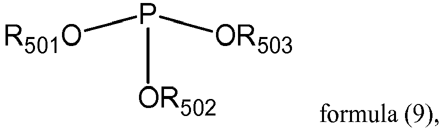 wherein, in formula (9), R₅₀₁ to R₅₀₃ each independently represent hydrogen atom, a substituted or non-substituted alkyl group or a substituted or non-substituted aryl group, and any of R₅₀₁ to R₅₀₃ is a substituted or non-substituted alkyl group or a substituted or non-substituted aryl group.

20. The method according to claim 18 or 19, comprising making the cellulose separator come into contact with the solution to modify the hydroxy group of the cellulose fiber to the phosphoric acid residue or the phosphorous acid residue.

21. The method according to any one of claims 18 to 20, comprising carrying out heat treatment in a state where the cellulose separator is made to contact with the solution.

## Patentansprüche

1. Lithiumsekundärbatterie, die Folgendes umfasst:
eine negative Elektrode, die eine Aktivsubstanz der negativen Elektrode umfasst;
einen Separator; und
eine Elektrolytflüssigkeit, die ein Hilfssalz und ein nichtwässriges Elektrolytlösungsmittel umfasst,
wobei der Separator eine anorganische Faser als einen Hauptbestandteil umfasst, **dadurch gekennzeichnet, dass** eine Hydroxygruppe auf einer Oberfläche der anorganischen Faser in einen Phosphorsäurerest oder einen Phosphonsäurerest modifiziert ist.

2. Lithiumsekundärbatterie gemäß Anspruch 1, wobei der Phosphorsäurerest durch Formel (6) und der Phosphonsäurerest durch Formel (7) repräsentiert wird: 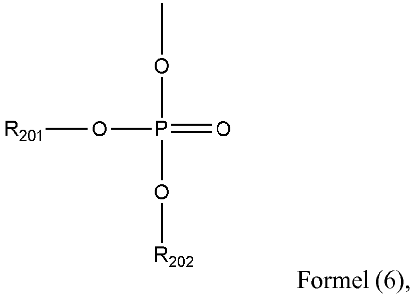 wobei, in Formel (6), R₂₀₁ und R₂₀₂ jeweils unabhängig ein Wasserstoffatom, eine substituierte oder nicht substituierte Alkylgruppe oder eine substituierte oder nicht substituierte Arylgruppe darstellen; und 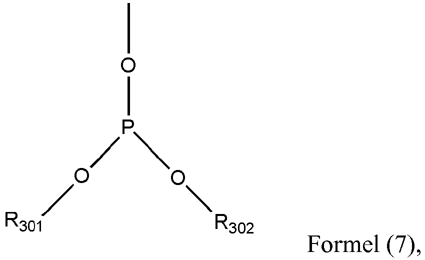 wobei, in Formel (7), R₃₀₁ und R₃₀₂ jeweils unabhängig ein Wasserstoffatom, eine substituierte oder nicht substituierte Alkylgruppe oder eine substituierte oder nicht substituierte Arylgruppe darstellen.

3. Lithiumsekundärbatterie gemäß Anspruch 1 oder 2, wobei die anorganische Faser Aluminiumoxidfaser, Kohlenstofffaser oder Glasfaser ist.

4. Lithiumsekundärbatterie gemäß einem der Ansprüche 1 bis 3, wobei der anorganisches Material enthaltende Separator 30 Massenprozent oder mehr der anorganischen Faser enthält..

5. Lithiumsekundärbatterie, die folgendes einschließt:
eine negative Elektrode, die eine Aktivsubstanz der negativen Elektrode umfasst,
eine Elektrolytflüssigkeit, die ein Hilfssalz und ein nicht wässriges Elektrolytlösungsmittel umfasst, und
einen Separator, der ein Zellulosederivat umfasst, das durch Formel (1) repräsentiert wird: 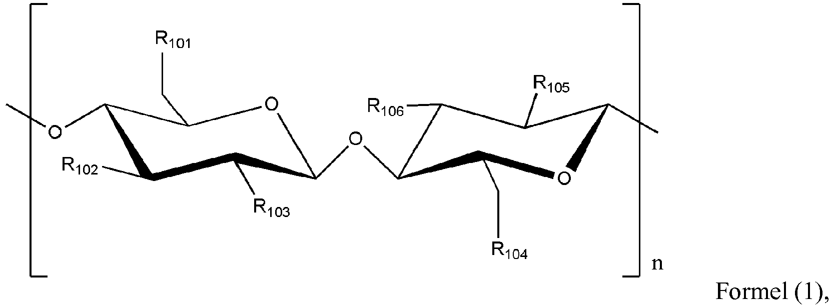 wobei, in Formel (1), R₁₀₁ bis R₁₀₆ jeweils unabhängig eine Hydroxygruppe, einen Phosphorsäurerest oder einen Phosphonsäurerest darstellen und mindestens einer von R₁₀₁ bis R₁₀₆ ein Phosphorsäurerest oder ein Phosphonsäurerest ist; und n eine ganze Zahl von 2 oder mehr ist, und R₁₀₁ bis R₁₀₆ in jeder Einheit jeweils unabhängig sind,
wobei der Phosphorsäurerest durch Formel (2) repräsentiert wird und der Phosphonsäurerest durch Formel (3) repräsentiert wird, wie unten gezeigt: 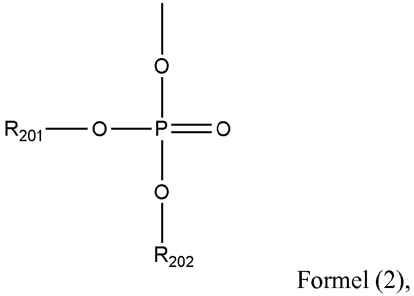 wobei, in Formel (2), R₂₀₁ und R₂₀₂ jeweils unabhängig ein Wasserstoffatom, eine substituierte oder nicht substituierte Alkylgruppe oder eine substituierte oder nicht substituierte Arylgruppe darstellen, 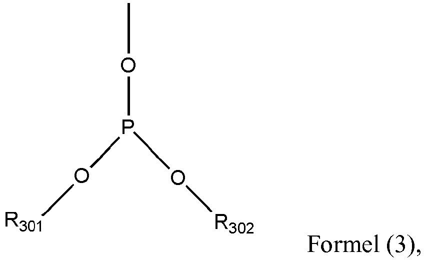 wobei, in Formel (3), R₃₀₁ und R₃₀₂ jeweils unabhängig ein Wasserstoffatom, eine substituierte oder nicht substituierte Alkylgruppe oder eine substituierte oder nicht substituierte Arylgruppe darstellen.

6. Lithiumsekundärbatterie gemäß Anspruch 5, wobei die Aktivsubstanz der negativen Elektrode mindestens eine ausgewählt aus Silicium und Siliciumoxid ist.

7. Lithiumsekundärbatterie gemäß Anspruch 5 oder 6, wobei das nicht wässrige Elektrolytlösungsmittel ein fluoriertes Carbonat umfasst.

8. Lithiumsekundärbatterie gemäß einem der Ansprüche 5 bis 7, wobei das nicht wässrige Elektrolytlösungsmittel ein Phosphat als ein Hauptlösungsmittel umfasst.

9. Lithiumsekundärbatterie gemäß einem der Ansprüche 1 bis 4, wobei die Aktivsubstanz der negativen Elektrode mindestens eine ausgewählt aus Silicium und Siliciumoxid ist.

10. Lithiumsekundärbatterie gemäß einem der Ansprüche 1 bis 4 und 9, wobei das nicht wässrige Elektrolytlösungsmittel ein fluoriertes Carbonat umfasst.

11. Lithiumsekundärbatterie gemäß einem der Ansprüche 1 bis 4, 9 und 10, wobei das nicht wässrige Elektrolytlösungsmittel ein Phosphat als ein Hauptlösungsmittel umfasst.

12. Verfahren zum Herstellen einer Lithiumsekundärbatterie gemäß Anspruch 1, welches das in-Kontakt-Bringen eines anorganisches Material enthaltenden Separators, der eine anorganische Faser umfasst, die auf einer Oberfläche davon eine Hydroxygruppe umfasst, mit einer Lösung, die ein Phosphat oder ein Phosphit und Wasser enthält, umfasst.

13. Verfahren gemäß Anspruch 12, wobei das Phosphat durch Formel (12) repräsentiert wird und das Phosphit durch Formel (13) repräsentiert wird: 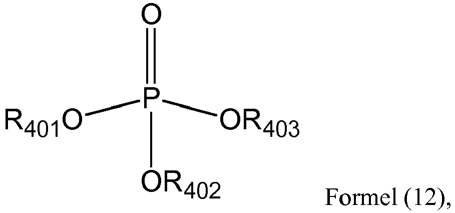 wobei, in Formel (12), R₄₀₁ bis R₄₀₃ jeweils unabhängig ein Wasserstoffatom, eine substituierte oder nicht substituierte Alkylgruppe oder eine substituierte oder nicht substituierte Arylgruppe darstellen, und eines von R₄₀₁ bis R₄₀₃ eine substituierte oder nicht substituierte Alkylgruppe oder eine substituierte oder nicht substituierte Arylgruppe ist; und 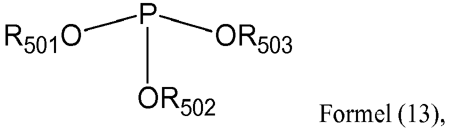 wobei, in Formel (13), R₅₀₁ bis R₅₀₃ jeweils unabhängig ein Wasserstoffatom, eine substituierte oder nicht substituierte Alkylgruppe oder eine substituierte oder nicht substituierte Arylgruppe darstellen, und eines von R₅₀₁ bis R₅₀₃ eine substituierte oder nicht substituierte Alkylgruppe oder eine substituierte oder nicht substituierte Arylgruppe ist.

14. Verfahren gemäß Anspruch 12 oder 13, welches in-Kontakt-Bringen des anorganisches Material enthaltenden Separators mit der Lösung zum Modifizieren der Hydroxygruppe der anorganischen Faser in den Phosphorsäurerest oder den Phosphonsäurerest umfasst.

15. Verfahren gemäß einem der Ansprüche 12 bis 14, wobei die anorganische Faser Aluminiumoxidfaser, Kohlenstofffaser oder Glasfaser ist.

16. Verfahren gemäß einem der Ansprüche 12 bis 15, welches das Ausführen einer Wärmebehandlung in einem Zustand, in dem der anorganisches Material enthaltende Separator in Kontakt mit der Lösung gebracht wird, umfasst.

17. Verfahren gemäß einem der Ansprüche 12 bis 16, wobei die Lösung weiter eine Säure umfasst.

18. Verfahren zum Herstellen einer Lithiumsekundärbatterie gemäß Anspruch 5, welches das in-Kontakt-Bringen eines Zelluloseseparators, dessen Hauptbestandteil Zellulose ist, mit einer Lösung, die ein Phosphat oder ein Phosphit und Wasser enthält, umfasst.

19. Verfahren gemäß Anspruch 18, wobei das Phosphat durch Formel (8) repräsentiert wird und das Phosphit durch Formel (9) repräsentiert wird: 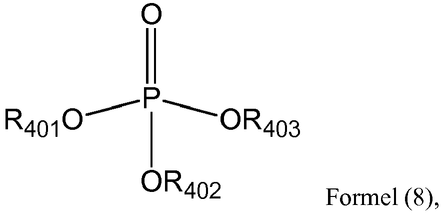 wobei, in Formel (8), R₄₀₁ bis R₄₀₃ jeweils unabhängig ein Wasserstoffatom, eine substituierte oder nicht substituierte Alkylgruppe oder eine substituierte oder nicht substituierte Arylgruppe darstellen, und eines von R₄₀₁ bis R₄₀₃ eine substituierte oder nicht substituierte Alkylgruppe oder eine substituierte oder nicht substituierte Arylgruppe ist; und 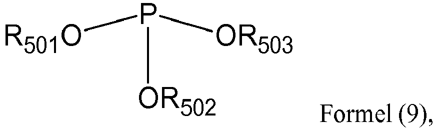 wobei, in Formel (9), R₅₀₁ bis R₅₀₃ jeweils unabhängig ein Wasserstoffatom, eine substituierte oder nicht substituierte Alkylgruppe oder eine substituierte oder nicht substituierte Arylgruppe darstellen, und eines von R₅₀₁ bis R₅₀₃ eine substituierte oder nicht substituierte Alkylgruppe oder eine substituierte oder nicht substituierte Arylgruppe ist.

20. Verfahren gemäß Anspruch 18 oder 19, welches das in-Kontakt-Bringen des Zelluloseseparators mit der Lösung zum Modifizieren der Hydroxygruppe der Zellulosefaser in den Phosphorsäurerest oder den Phosphonsäurerest umfasst..

21. Verfahren gemäß einem der Ansprüche 18 bis 20, welches das Ausführen einer Wärmebehandlung in einem Zustand, in dem der Zelluloseseparator in Kontakt mit der Lösung gebracht wird, umfasst.

## Revendications

1. Batterie rechargeable au lithium, comprenant :
une électrode négative comprenant une substance active d'électrode négative ;
un séparateur ; et
un liquide électrolytique comprenant un sel de support et un solvant électrolytique non aqueux,
dans laquelle le séparateur comprend une fibre inorganique comme principal constituant, **caractérisée en ce qu'**un groupe hydroxyle sur une surface de la fibre inorganique est transformé en un résidu d'acide phosphorique ou un résidu d'acide phosphoreux.

2. Batterie rechargeable au lithium selon la revendication 1, dans laquelle le résidu d'acide phosphorique est représenté par la formule (6) et le résidu d'acide phosphoreux est représenté par la formule (7) : 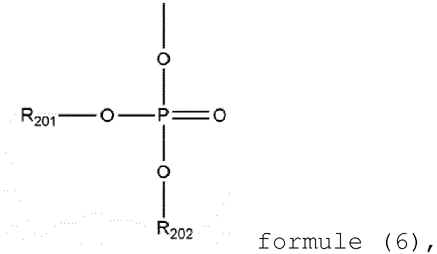 dans laquelle, dans la formule (6), R₂₀₁ et R₂₀₂ représentent chacun indépendamment un atome d'hydrogène, un groupe alkyle substitué ou non substitué ou un groupe aryle substitué ou non substitué ; et 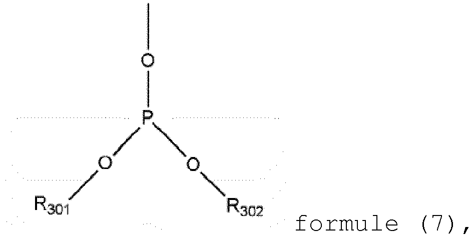 dans laquelle, dans la formule (7), R₃₀₁ et R₃₀₂ représentent chacun indépendamment un atome d'hydrogène, un groupe alkyle substitué ou non substitué ou un groupe aryle substitué ou non substitué.

3. Batterie rechargeable au lithium selon la revendication 1 ou 2, dans laquelle la fibre inorganique est une fibre d'alumine, une fibre de carbone ou une fibre de verre.

4. Batterie rechargeable au lithium selon l'une quelconque des revendications 1 à 3, dans laquelle le séparateur contenant un matériau inorganique contient 30 % en masse ou plus de la fibre inorganique.

5. Batterie rechargeable au lithium, comportant :
une électrode négative comprenant une substance active d'électrode négative,
un liquide électrolytique comprenant un sel de support et un solvant électrolytique non aqueux, et
un séparateur comprenant un dérivé cellulosique représenté par la formule (1) : 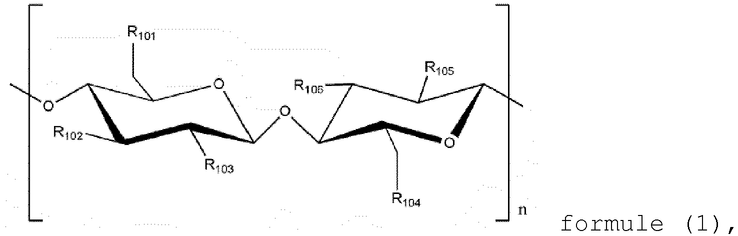 dans laquelle, dans la formule (1), R₁₀₁ à R₁₀₆ représentent chacun indépendamment un groupe hydroxyle, un résidu d'acide phosphorique ou un résidu d'acide phosphoreux, et au moins un des R₁₀₁ à R₁₀₆ est un résidu d'acide phosphorique ou un résidu d'acide phosphoreux ; et n est un nombre entier valant 2 ou plus, et R₁₀₁ à R₁₀₆ sont respectivement indépendants dans chaque motif,
dans laquelle le résidu d'acide phosphorique est représenté par la formule (2) et le résidu d'acide phosphoreux est représenté par la formule (3) telles que montrées ci-dessous : 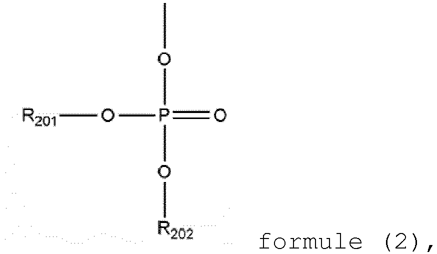 dans laquelle, dans la formule (2), R₂₀₁ et R₂₀₂ représentent chacun indépendamment un groupe alkyle substitué ou non substitué ou un groupe aryle substitué ou non substitué, 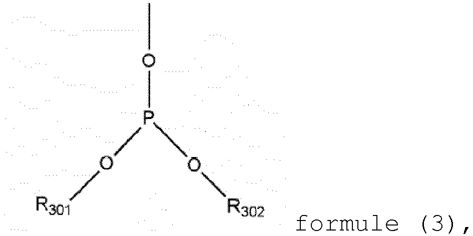 dans laquelle, dans la formule (3), R₃₀₁ et R₃₀₂ représentent chacun indépendamment un atome d'hydrogène, un groupe alkyle substitué ou non substitué ou un groupe aryle substitué ou non substitué.

6. Batterie rechargeable au lithium selon la revendication 5, dans laquelle la substance active d'électrode négative en est au moins une choisie entre le silicium et l'oxyde de silicium.

7. Batterie rechargeable au lithium selon la revendication 5 ou 6, dans laquelle le solvant électrolytique non aqueux comprend un carbonate fluoré.

8. Batterie rechargeable au lithium selon l'une quelconque des revendications 5 à 7, dans laquelle le solvant électrolytique non aqueux comprend un phosphate comme principal solvant.

9. Batterie rechargeable au lithium selon l'une quelconque des revendications 1 à 4, dans laquelle la substance active d'électrode négative en est au moins une choisie entre la silicone et l'oxyde de silicone.

10. Batterie rechargeable au lithium selon l'une quelconque des revendications 1 à 4 et 9, dans laquelle le solvant électrolytique non aqueux comprend un carbonate fluoré.

11. Batterie rechargeable au lithium selon l'une quelconque des revendications 1 à 4, 9 et 10, dans laquelle le solvant électrolytique non aqueux comprend un phosphate comme principal solvant.

12. Procédé de production d'une batterie rechargeable au lithium selon la revendication 1, comprenant la mise en contact d'un séparateur contenant un matériau inorganique, qui comprend une fibre inorganique comprenant un groupe hydroxyle sur une surface de celle-ci, avec une solution comprenant un phosphate ou un phosphite, et de l'eau.

13. Procédé selon la revendication 12, dans lequel le phosphate est représenté par la formule (12) et le phosphite est représenté par la formule (13) : 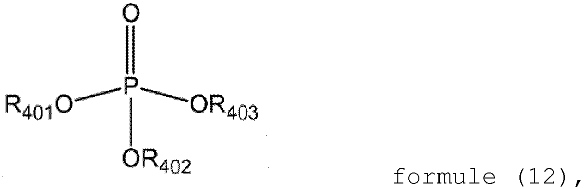 dans laquelle, dans la formule (12), R₄₀₁ à R₄₀₃ représentent chacun indépendamment un atome d'hydrogène, un groupe alkyle substitué ou non substitué ou un groupe aryle substitué ou non substitué, et l'un quelconque des R₄₀₁ à R₄₀₃ est un groupe alkyle substitué ou non substitué ou un groupe aryle substitué ou non substitué ; et 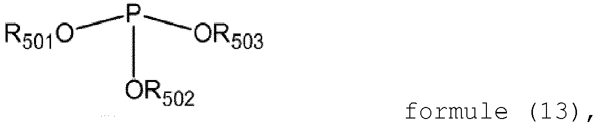 dans laquelle, dans la formule (13), R₅₀₁ à R₅₀₃ représentent chacun indépendamment un atome d'hydrogène, un groupe alkyle substitué ou non substitué ou un groupe aryle substitué ou non substitué, et l'un quelconque des R₅₀₁ à R₅₀₃ est un groupe alkyle substitué ou non substitué ou un groupe aryle substitué ou non substitué.

14. Procédé selon la revendication 12 ou 13, comprenant la mise en contact du séparateur contenant un matériau inorganique avec la solution pour transformer le groupe hydroxyle de la fibre inorganique en le résidu d'acide phosphorique ou le résidu d'acide phosphoreux.

15. Procédé selon l'une quelconque des revendications 12 à 14, dans lequel la fibre inorganique est une fibre d'alumine, une fibre de carbone ou une fibre de verre.

16. Procédé selon l'une quelconque des revendications 12 à 15, comprenant la réalisation d'un traitement thermique dans un état où le séparateur contenant un matériau inorganique est mis en contact avec la solution.

17. Procédé selon l'une quelconque des revendications 12 à 16, dans lequel la solution comprend en outre un acide.

18. Procédé de production d'une batterie rechargeable au lithium selon la revendication 5, comprenant la mise en contact d'un séparateur cellulosique, dont le principal constituant est la cellulose, avec une solution comprenant un phosphate ou un phosphite, et de l'eau.

19. Procédé selon la revendication 18, dans lequel le phosphate est représenté par la formule (8) et le phosphite est représenté par la formule (9) : 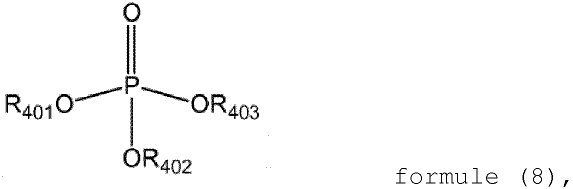 dans lequel, dans la formule (8), R₄₀₁ à R₄₀₃ représentent chacun indépendamment un atome d'hydrogène, un groupe alkyle substitué ou non substitué ou un groupe aryle substitué ou non substitué, et l'un quelconque des R₄₀₁ à R₄₀₃ est un groupe alkyle substitué ou non substitué ou un groupe aryle substitué ou non substitué ; et 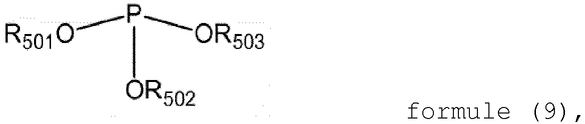 dans lequel, dans la formule (9), R₅₀₁ à R₅₀₃ représentent chacun indépendamment un atome d'hydrogène, un groupe alkyle substitué ou non substitué ou un groupe aryle substitué ou non substitué, et l'un quelconque des R₅₀₁ à R₅₀₃ est un groupe alkyle substitué ou non substitué ou un groupe aryle substitué ou non substitué.

20. Procédé selon la revendication 18 ou 19, comprenant la mise en contact du séparateur cellulosique avec la solution pour transformer le groupe hydroxyle de la fibre cellulosique en le résidu d'acide phosphorique ou le résidu d'acide phosphoreux.

21. Procédé selon l'une quelconque des revendications 18 à 20, comprenant la réalisation d'un traitement thermique dans un état où le séparateur cellulosique est mis en contact avec la solution.
